# EUROPEAN PATENT APPLICATION

(11) **EP 4 845 063 A1**
(43) Date of publication of application: **25.11.2026**
(21) Application number: 25751192.3
(22) Date of filing: 21.01.2025
(51) Int. Cl.: H04L 1/00, H04W 72/12

(54) **ENCODING AND MODULATION METHOD AND RELATED APPARATUS**

(30) Priority: 05.02.2024 CN 202410168578
(71) Applicant: Huawei Technologies Co., Ltd., Shenzhen, Guangdong 518129 (CN)
(72) Inventor: DONG, Pengpeng, Shenzhen, Guangdong 518129 (CN); ZHENG, Chen, Shenzhen, Guangdong 518129 (CN); XIONG, Jie, Shenzhen, Guangdong 518129 (CN)
(74) Representative: Huawei European IPR
(86) International application number: PCT/CN2025/073663
(87) International publication number: WO 2025/167590

(57) **Abstract**

This application provides a coding and modulation method and a related apparatus. The method includes: encoding N input bit sequences by using code rates respectively corresponding to the N input bit sequences, to obtain N encoded bit sequences respectively corresponding to the N input bit sequences, where a length of each input bit sequence is determined based on at least one of the following: a code rate that corresponds to the input bit sequence, a modulation order that corresponds to the input bit sequence, and a quantity of resource elements REs used for data transmission; and mapping the N encoded bit sequences to a same constellation diagram, where the constellation diagram includes M constellation points, each constellation point includes N bit segments, and the N bit segments respectively correspond to the N encoded bit sequences. This process ensures transmission efficiency while reducing encoding complexity at the transmitting end. In addition, protocol modifications are minimized, thereby lowering coding implementation costs.

## Description

This application claims priority to Chinese Patent Application No. 202410168578.1, filed with the China National Intellectual Property Administration on February 5, 2024 and entitled "CODING AND MODULATION METHOD AND RELATED APPARATUS", which is incorporated herein by reference in its entirety.

### TECHNICAL FIELD

This application relates to the channel coding field, and in particular, to a coding and modulation method and a related apparatus.

### BACKGROUND

Channel coding is one of core technologies in the field of wireless communication. A channel coding process may involve cyclic redundancy check code insertion, code block segmentation, error correction coding, rate adaptation, code block concatenation, data interleaving, and data scrambling, with error correction encoding being the most important part. The objective of error correction coding is to ensure that a receiving end can automatically correct data transmission errors with minimum redundancy overhead. Under a given bit error rate, lower redundancy overhead leads to higher coding efficiency. Traditional channel encoding and decoding generally include linear block codes (for example, Hamming codes, Gray codes, Bose-Chaudhuri-Hocquenghem (Bose-Chaudhuri-Hocquenghem, BCH) codes, and Reed-Solomon (Reed-Solomon, RS) codes), convolutional codes, and concatenated codes. Each has its own unique characteristics and performance applicable to different scenarios.

In 3G and 4G mobile communication systems, turbo (Turbo) codes, as an encoding and decoding technology defined in the 3rd generation partnership project (3rd Generation Partnership Project, 3GPP) standard, were adopted as convolutional codes with excellent performance, capable of approaching the Shannon limit. In the 5G era, more diverse service application scenarios and new requirements for channel coding emerged. Based on key requirements for channel coding in three typical 5G application scenarios, the 5G standard finally adopted low density parity check (low density parity check, LDPC) codes and polar (Polar) codes. With the advent of 6G, real-time high-data-rate applications, such as extended reality (extended reality, XR), mixed reality (mixed reality, MR), and immersive services, have emerged. These new services pose higher requirements on peak throughput and area efficiency of encoding and decoding, with peak rates expected to reach the Tbps level, while also demanding further reductions in decoder power consumption. Therefore, chip-level channel encoding and decoding need to pursue technical breakthroughs in two main directions: high-throughput, low-power-consumption encoding and decoding, and highly reliable encoding and decoding, so as to achieve the objectives of future standards through a new encoding design, a low-complexity decoding design, and the like.

In conventional technologies, how to implement high-throughput, low-power-consumption encoding and decoding on the encoding side by fully using time-frequency resources allocated for data transmission, while minimizing protocol modifications, is an urgent issue to be resolved.

### SUMMARY

Embodiments of this application provide a coding and modulation method and a related apparatus. By mapping N input bit sequences to their respective time-frequency resources allocated to a transmitting end, data transmission efficiency is ensured, coding complexity at the transmitting end is reduced, and protocol modifications are minimized, thereby lowering coding implementation costs.

According to a first aspect, this application provides a coding and modulation method, applied to a first device. The first device may be a network device or a chip that can be used in the network device, or may be a terminal device or a chip that can be used in the terminal device. The method includes: encoding N input bit sequences by using code rates respectively corresponding to the N input bit sequences, to obtain N encoded bit sequences respectively corresponding to the N input bit sequences, where N is an integer greater than or equal to 2, a length of each input bit sequence is determined based on information related to the input bit sequence, and the information related to the input bit sequence includes at least one of the following: a code rate that corresponds to the input bit sequence, a modulation order that corresponds to the input bit sequence, and a quantity of resource elements REs used for data transmission; and mapping the N encoded bit sequences to a same constellation diagram, where the constellation diagram includes M constellation points, each constellation point includes N bit segments, the N bit segments respectively correspond to the N encoded bit sequences, and M is an integer greater than or equal to 1.

In this embodiment of this application, the N input bit sequences are encoded by using the respective code rates, to obtain the N encoded bit sequences, and the N encoded bit sequences are mapped to different bit segments of the constellation point in the constellation diagram. This can ensure that data transmission for the N input bit sequences is performed based on a protection capability of each of the N bit segments of the constellation point.

In addition, the length of each input bit sequence is determined based on the information related to the input bit sequence, so that an encoded bit sequence of the input bit sequence can correspond to a time-frequency resource allocated to the input bit sequence, thereby ensuring data transmission efficiency while reducing encoding complexity at the transmitting end. In addition, protocol modifications can be minimized, thereby lowering coding implementation costs.

In some possible implementations, the method further includes: determining the information related to the input bit sequence.

In some possible implementations, the information related to the input bit sequence corresponds to one or more correspondence sets, and the correspondence set includes at least one correspondence between a modulation and coding scheme MCS index and the modulation order and/or the code rate of the input bit sequence.

In some possible implementations, the determining the information related to the input bit sequence includes: obtaining the modulation and coding scheme MCS index and the quantity of REs, and determining the modulation order and/or the code rate of the input bit sequence based on the MCS index and the correspondence set.

Optionally, the information related to the input bit sequence is carried in higher layer signaling or downlink control information DCI.

In a possible implementation, the DCI includes an MCS index indication field, and the MCS index indication field indicates the modulation order and/or the code rate of the input bit sequence.

In this embodiment of this application, a set of correspondences between modulation and coding scheme (modulation and coding scheme, MCS) indexes, and modulation orders and code rates of a TB is included. An encoding side may determine the modulation order and the code rate of the input bit sequence based on the received MCS index. In one aspect, assuming that the MCS index indication field corresponds to an existing field in the DCI, an existing MCS index can be fully used, a quantity of newly added fields in the DCI is reduced, and signaling overhead is reduced. In another aspect, assuming that the MCS index indication field is a newly added field, flexibility of setting the MCS index can be improved, a quantity of semantic changes of an existing field in the DCI can be reduced, and implementation complexity can be reduced. In still another aspect, assuming that the MCS index is a combination of an existing field and a newly added field, advantages of the foregoing two may be included, and flexibility of sending the MCS index through the DCI is improved while signaling overhead is reduced.

In some possible implementations, each of the N input bit sequences is subjected to code block segmentation to obtain a corresponding quantity of code blocks CBs, where the N input bit sequences include a reference bit sequence and another bit sequence other than the reference bit sequence, and a maximum length of an encoded bit sequence of a CB corresponding to the another bit sequence is determined based on a maximum code block constraint value and a specific constant, or a maximum length of an encoded bit sequence of a CB corresponding to the another input bit sequence is determined based on a maximum code block constraint value and a specific ratio, where the specific ratio is determined based on a ratio of a length of the another bit sequence to a length of the reference bit sequence.

In this embodiment of this application, the maximum length of the encoded bit sequence of the CB corresponding to the another bit sequence is adjusted or determined, so that a difference between a length of the encoded bit sequence of the CB corresponding to the another bit sequence and a length of an encoded bit sequence of a CB of the reference bit sequence is reduced, thereby reducing a delay between arrivals of CBs of different TBs at a receiving end, and improving decoding efficiency or a decoding throughput of the receiving end.

In some possible implementations, lengths of encoded bit sequences of CBs corresponding to different input bit sequences in the N input bit sequences are the same, or quantities of CBs corresponding to different input bit sequences are the same.

In this embodiment of this application, the quantities of CBs of the different input bit sequences are aligned, so that a granularity of time-frequency resource alignment for the different input bit sequences is finer, a decoding waiting delay is lower, and protocol modification complexity is greatly reduced.

In some possible implementations, the method further includes: determining a maximum length of encoded bit sequences of CBs corresponding to the N input bit sequences, including determining a maximum length of the encoded bit sequence of the CB corresponding to the reference bit sequence, and a maximum length of the encoded bit sequence of the CB corresponding to the another bit sequence in the N input bit sequences.

In some possible implementations, the determining the maximum length of the encoded bit sequence of the CB corresponding to the reference bit sequence includes:
determining, based on the maximum code block constraint value, the maximum length of the encoded bit sequence of the CB corresponding to the reference bit sequence.

In some possible implementations, the determining the maximum length of the encoded bit sequence of the CB corresponding to the another bit sequence includes: determining code block-related information, and determining the maximum length of the another bit sequence based on the code block-related information, where the code block-related information includes the maximum code block constraint value, and further includes at least one of the following: the specific constant and the specific ratio.

In some possible implementations, the method further includes: outputting the bit sequences mapped to the same constellation diagram.

According to a second aspect, this application provides a decoding method, applied to a second device. The second device may be a network device or a chip that can be used in the network device, or may be a terminal device or a chip that can be used in the terminal device. The method includes: receiving first data, where the first data corresponds to N pre-decoding bit sequences respectively corresponding to N bit segment sequences in a constellation diagram, lengths of N output bit sequences corresponding to the N pre-decoding bit sequences are determined based on information related to the output bit sequences, and the information related to the output bit sequence includes a code rate, a modulation order, and a quantity of resource elements REs for data transmission; and
processing the first data, where the processing includes respectively demapping N bit segments of a constellation point in the constellation diagram to the N pre-decoding bit sequences, and decoding the N pre-decoding bit sequences based on the lengths of the N output bit sequences.

According to a third aspect, this application provides a coding and modulation apparatus, where the apparatus includes:
a coding unit, configured to encode N input bit sequences by using code rates respectively corresponding to the N input bit sequences, to obtain N encoded bit sequences respectively corresponding to the N input bit sequences, where N is an integer greater than or equal to 2, a length of each input bit sequence is determined based on information related to the input bit sequence, and the information related to the input bit sequence includes at least one of the following: a code rate that corresponds to the input bit sequence, a modulation order that corresponds to the input bit sequence, and a quantity of resource elements REs used for data transmission; and a modulation unit, configured to map the N encoded bit sequences to a same constellation diagram, where the constellation diagram includes M constellation points, each constellation point includes N bit segments, the N bit segments respectively correspond to the N encoded bit sequences, and M is an integer greater than or equal to 1.

In some possible implementations, the coding unit is further configured to determine the information related to the input bit sequence.

In some possible implementations, the information related to the input bit sequence corresponds to one or more correspondence sets, and the correspondence set includes at least one correspondence between a modulation and coding scheme MCS index and the modulation order and/or the code rate of the input bit sequence.

In some possible implementations, the determining the information related to the input bit sequence includes: obtaining the modulation and coding scheme MCS index and the quantity of REs, and determining the modulation order and/or the code rate of the input bit sequence based on the MCS index and the correspondence set.

In some possible implementations, the information related to the input bit sequence is carried in higher layer signaling or downlink control information DCI.

In some possible implementations, each of the N input bit sequences is subjected to code block segmentation to obtain a corresponding quantity of code blocks CBs, where the N input bit sequences include a reference bit sequence and another bit sequence other than the reference bit sequence, and a maximum length of an encoded bit sequence of a CB corresponding to the another bit sequence is determined based on a maximum code block constraint value and a specific constant, or a maximum length of an encoded bit sequence of a CB corresponding to the another input bit sequence is determined based on a maximum code block constraint value and a specific ratio, where the specific ratio is determined based on a ratio of a length of the another bit sequence to a length of the reference bit sequence.

In some possible implementations, lengths of encoded bit sequences of CBs corresponding to different input bit sequences in the N input bit sequences are the same, or quantities of CBs corresponding to different input bit sequences are the same.

In some possible implementations, the coding unit is further configured to determine a maximum length of encoded bit sequences of CBs corresponding to the N input bit sequences, including determining a maximum length of an encoded bit sequence of a CB corresponding to the reference bit sequence, and the maximum length of the encoded bit sequence of the CB corresponding to the another bit sequence in the N input bit sequences.

In some possible implementations, the coding unit is specifically configured to determine, based on the maximum code block constraint value, the maximum length of the encoded bit sequence of the CB corresponding to the reference bit sequence.

In some possible implementations, the coding unit is specifically configured to: determine code block-related information, and determine the maximum length of the another bit sequence based on the code block-related information, where the code block-related information includes the maximum code block constraint value, and further includes at least one of the following: the specific constant and the specific ratio.

In some possible implementations, the coding and modulation apparatus further includes an output unit, configured to output the bit sequences mapped to the same constellation diagram.

According to a fourth aspect, this application provides a decoding and demodulation apparatus, where the apparatus includes:
a transceiver unit, configured to receive first data, where the first data corresponds to N pre-decoding bit sequences respectively corresponding to N bit segment sequences in a constellation diagram, lengths of N output bit sequences corresponding to the N pre-decoding bit sequences are determined based on information related to the output bit sequences, and the information related to the output bit sequence includes a code rate, a modulation order, and a quantity of resource elements REs for data transmission; and
a decoding and demodulation unit, configured to: process the first data, where the processing includes respectively demapping N bit segments of a constellation point in the constellation diagram to the N pre-decoding bit sequences, and decode the N pre-decoding bit sequences based on the lengths of the N output bit sequences.

According to a fifth aspect, this application provides an electronic device, where the electronic device includes a processor, the processor is coupled to a memory, and when the processor executes a computer program or instructions in the memory, the method in any one of the implementations of the first aspect is performed, or the method in any one of the implementations of the second aspect is performed.

Optionally, the device further includes the memory.

Optionally, the device further includes a communication interface, and the processor is coupled to the communication interface.

Optionally, there are one or more processors, and there are one or more memories.

Optionally, the memory may be integrated with the processor, or the memory and the processor are disposed separately.

Optionally, a transceiver may include a transmitter machine (transmitter) and a receiver machine (receiver).

In an implementation, the device is a terminal device or a network device. When the device is the terminal device or the network device, the communication interface may be a transceiver or an input/output interface. Optionally, the transceiver may be a transceiver circuit. Optionally, the input/output interface may be an input/output circuit.

In another implementation, the device is a chip or a chip system. When the device is the chip or the chip system, the communication interface may be an input/output interface, an interface circuit, an output circuit, an input circuit, a pin, a related circuit, or the like on the chip or in the chip system. The processor may alternatively be embodied as a processing circuit or a logic circuit.

According to a sixth aspect, this application provides a computer program product. The computer program product includes a computer program (which may also be referred to as code or instructions). When the computer program is run, a computer is caused to perform the method in any one of the possible implementations of the first aspect.

According to a seventh aspect, this application provides a computer-readable storage medium. The computer-readable medium stores a computer program (which may also be referred to as code or instructions). When the computer program is run on a computer, the computer is caused to perform the method in any one of the possible implementations of the first aspect.

According to an eighth aspect, this application further provides a circuit, including a processor and an interface, configured to execute a computer program or instructions stored in a memory, to perform the method in any one of the possible implementations of the first aspect.

According to a ninth aspect, this application further provides a system, including the apparatus in the third aspect and/or the fourth aspect.

### BRIEF DESCRIPTION OF DRAWINGS

FIG. 1 is a diagram of application scenarios according to an embodiment of this application;
FIG. 2A is a diagram of a transmitting end and a receiving end for layered encoding and modulation according to an embodiment of this application;
FIG. 2B is a diagram of a 16QAM constellation diagram according to an embodiment of this application;
FIG. 3A is a flowchart of a coding and modulation method according to an embodiment of this application;
FIG. 3B(a) and FIG. 3B(b) are diagrams of relationships between different TB lengths according to an embodiment of this application;
FIG. 3C(a) and FIG. 3C(b) are diagrams of time-frequency resources of different layers after layered modulation according to an embodiment of this application;
FIG. 4A is a block diagram of a layered encoding and modulation procedure according to an embodiment of this application;
FIG. 4B is a diagram of time-frequency resources of different layers after another type of layered modulation according to an embodiment of this application;
FIG. 5 is a diagram of a structure of a coding and modulation apparatus according to an embodiment of this application;
FIG. 6 is a diagram of a structure of a decoding and demodulation apparatus according to an embodiment of this application; and
FIG. 7 is a diagram of a hardware structure of an electronic device according to an embodiment of this application.

### DESCRIPTION OF EMBODIMENTS

The following describes embodiments of the present invention with reference to the accompanying drawings in embodiments of the present invention.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Application scenarios corresponding to embodiments of this application are first described.

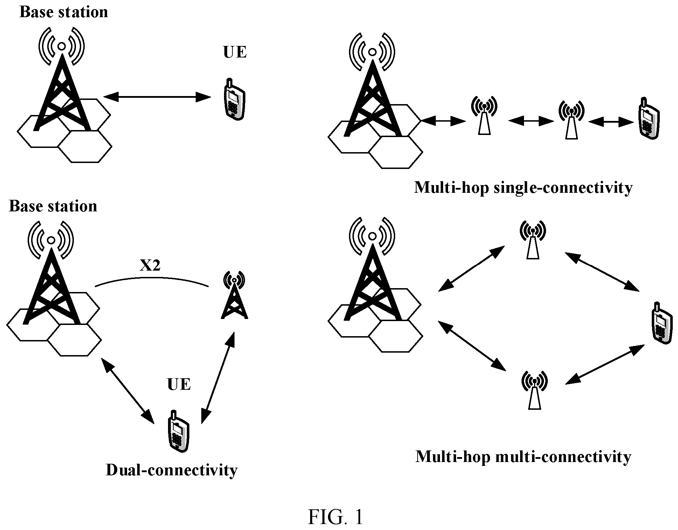

FIG. 1 is a diagram of application scenarios according to an embodiment of this application. As shown in FIG. 1, this embodiment of this application may be applied to a plurality of mobile communication scenarios such as a scenario of transmission between a base station and user equipment (user equipment, UE), a scenario of multi-hop/multi-relay (node) transmission between a base station and UE, a scenario of dual connectivity (dual connectivity, DC) between a plurality of base stations and UE, and a scenario of multi-connection between UE and a plurality of relays.

The following briefly describes terms involved in embodiments.

A wireless communication system includes communication devices, and the communication devices may perform wireless communication based on an air interface resource. The communication devices may include a network device and a terminal device, and the network device may also be referred to as a base station device. The air interface resource may include at least one of the following: a time domain resource, a frequency domain resource, a code resource, and a spatial resource. In embodiments of this application, at least one may alternatively be described as one or more, and a plurality of may be two, three, four, or more. This is not limited in this application.

In embodiments of this application, for a technical feature, "first", "second", "third", "A", "B", "C", "D", and the like are used for distinguishing between technical features therein. There is no chronological order or no size order between the technical features described by "first", "second", "third", "A", "B", "C", and "D".

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (for example, on a ship); or may be deployed in the air (for example, on an airplane, a balloon, and a satellite). The terminal device may be user equipment (user equipment, UE). The UE includes a handheld device, a vehicle-mounted device, a wearable device, or a compute device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in remote medical, a wireless terminal in a smart grid, a wireless terminal in a smart city (smart city), a wireless terminal in a smart home (smart home), or the like. In embodiments of this application, an apparatus configured to implement a function of a terminal may be a terminal; or may be an apparatus, for example, a chip system, that can support the terminal in implementing the function. The apparatus may be mounted in the terminal. In embodiments of this application, the chip system may include a chip, or may include a chip and another discrete component. In the technical solutions provided in embodiments of this application, the technical solutions provided in embodiments of this application are described by using an example in which the apparatus for implementing the function of the terminal is a terminal and the terminal is UE.

The network device in embodiments of this application includes an access network device, for example, a base station (base station, BS), and the BS may be a device that is deployed in a radio access network and that can perform wireless communication with the terminal. The base station may be in a plurality of forms, for example, a macro base station, a micro base station, a relay station, and an access point. The base station may also be referred to as a transmission reception point (transmission reception point, TRP). In embodiments of this application, an apparatus configured to implement a function of the network device may be a network device; or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus for implementing the function of the network device is a network device and the network device is a base station.

The technical solutions provided in embodiments of this application may be applied to channel encoding/decoding between communication devices. The channel encoding/decoding between the communication devices may include channel encoding/decoding between a network device and a terminal, channel encoding/decoding between network devices, and channel encoding/decoding between terminals. In embodiments of this application, the channel encoding and decoding are referred to as encoding and decoding for short, and an encoding structure may be referred to as a code type or code design for short, where the encoding structure includes a concatenated structure, a layered structure, a coupling structure, an inner-outer code structure, a staircase structure, a sliding-window structure, and the like.

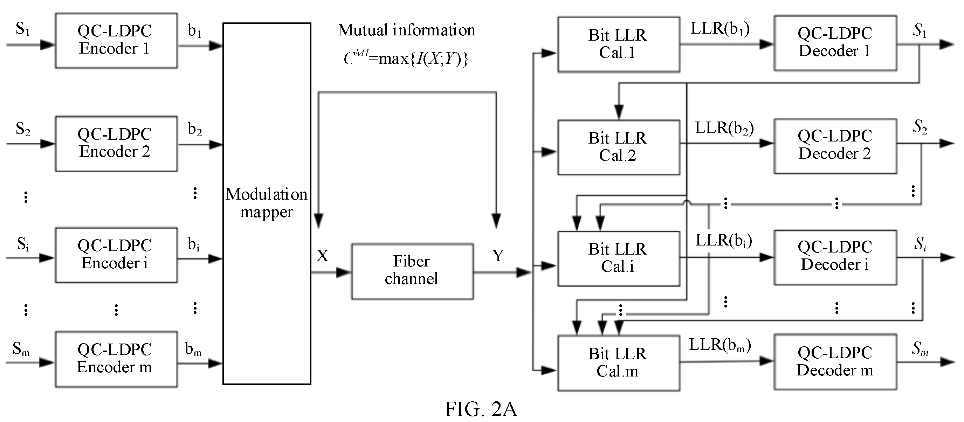

FIG. 2A is a diagram of an implementation of LDPC layered encoding and modulation, and decoding (which may also be referred to as decoding) according to an embodiment of this application. At a transmitting end (in other words, an encoder side), layered encoding is performed on input bit sequences S₁ to Sₘ shown in FIG. 2A. The respective input bit sequences are input to different quasi-cyclic LDPC (quasi-cyclic low density parity check, QC-LDPC) code component encoders (an encoder 1 to an encoder m in the figure) for encoding, and codewords corresponding to different encoded input bit sequences are mapped to different bit segments of a constellation point in a constellation diagram, so that a modulation process from a bit sequence to a symbol is completed (corresponding to a phase of a modulation mapper in the figure), to obtain a modulated signal. Then, the modulated signal is further processed to obtain a radio frequency signal, and the radio frequency signal is transmitted through a fiber channel. A receiving end (in other words, a decoder side) receives the radio frequency signal, may input the radio frequency signal to a plurality of bit log likelihood ratio (log likelihood ratio, LLR) calculation units (calculators, which correspond to Cal.1 to Cal.m) for processing, and then input the processed signal to QC-LDPC decoders (a decoder 1 to a decoder m in the figure) separately for iterative decoding, to obtain decoded bit segment sequences $\hat{{S}_{1}}$ to $\hat{{S}_{m}}$. It may be understood that the layered encoding may also be referred to as hierarchical encoding, and a name is not limited in this embodiment of this application. In addition, LDPC is used as an example in FIG. 2A, and the layered encoding and modulation are also applicable to other encoding modes.

It can be learned that, at the transmitting end, layered encoding and modulation, that is, layered encoding modulation, may be performed on the input bit sequence. Each input bit sequence may be referred to as one layer.

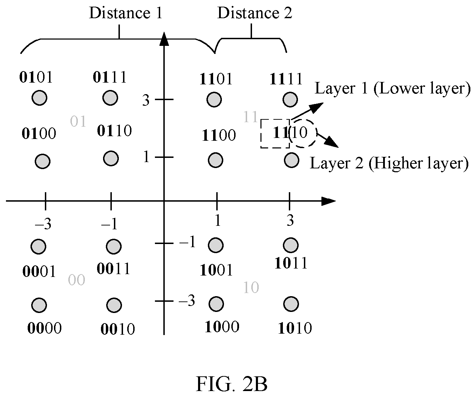

For a modulation process of a bit sequence after layered encoding, refer to FIG. 2B, which is a diagram of a 16QAM constellation diagram according to an embodiment of this application. As shown in FIG. 2B, 16 quadrature amplitude modulation (quadrature amplitude modulation, QAM) maps a digital signal (the bit sequence after layered encoding) to 16 complex symbols (constellation points), and each constellation point is represented by four bits. Adjacent constellation points differ by only 1 bit, which is reflected in the constellation diagram as constellation points with the same first two bits being located in the same quadrant.

For example, for each constellation point, first two bits may correspond to one time of quadrature phase shift keying (quadrature phase shift keying, QPSK), and last two bits correspond to another time of QPSK. One time of QPSK may correspond to an I channel (signal) or a Q channel (signal).

Therefore, a 16QAM symbol can be decomposed into first two bits and last two bits. When the last two bits are the same, a distance between the first two adjacent bits in the constellation diagram (corresponding to a distance 1 in the figure) is large, and there is a low probability that two channels of signals interfere with each other. That is, transmission reliability is high. When the first two bits are the same, a distance between the last two adjacent bits in the constellation diagram (corresponding to a distance 2 in the figure) is relatively small, and there is a high probability that two channels of signals interfere with each other. That is, transmission reliability is low. Therefore, a relatively high code rate may be used for encoded bits mapped to the first two bits, and a relatively low code rate may be used for encoded bits mapped to the last two bits, so that an encoding gain may be used at the receiving end to counteract impact of a radio channel or the like. In other words, layered modulation in the 16QAM may be shown in FIG. 2B. A bit sequence after layered encoding may be mapped to the first two bits in the constellation diagram to implement layer 1 symbol modulation, or a bit sequence after layered encoding may be mapped to the last two bits in the constellation diagram to implement layer 2 symbol modulation. In comparison with a layer 2, a layer 1 herein may correspond to an encoded bit sequence with a higher code rate. It may be understood that, in the 16QAM, three-layer layered encoding may also be performed, or layered encoding with another quantity of layers may be performed. This is not limited in this embodiment of this application.

For another example, layered encoding and modulation in 256QAM is used as an example, and a constellation point includes 8 bits. Layered encoding may be implemented by using component encoders for three layers: a layer 1, a layer 2, and a layer 3. In this case, a bit sequence after layered encoding may be mapped to first two bits in the constellation diagram to implement layer 1 symbol modulation, a bit sequence after layered encoding may be mapped to middle two bits in the constellation diagram to implement layer 2 symbol modulation, and a bit sequence after layered encoding may be mapped to last four bits in the constellation diagram to implement layer 3 symbol modulation. Code rates of the encoded bit sequences corresponding to the layer 1, the layer 2, and the layer 3 decrease sequentially, or code rates of the layer 1 and the layer 2 are the same, and a code rate of the layer 3 is lower. It may be understood that, quantities of bits, in a constellation point, to which the encoded bit sequences of the different layers are mapped may be the same or different, and the code rates of the different layers may be the same or may be different. It may be understood that, in the 256QAM, 2-layer layered encoding may also be performed, or layered encoding with another quantity of layers may be performed. This is not limited in this embodiment of this application.

In the foregoing layered encoding and modulation process, a layer encoded with a higher code rate may be referred to as a lower layer, and a layer encoded with a lower code rate may be referred to as a higher layer. In this case, in FIG. 2B, the layer 1 may correspond to (symbol modulation of) a lower layer, and a layer 2 corresponds to a higher layer. As a result of layered encoding and modulation, complexity of higher-layer bit decoding is higher than complexity of lower-layer bit decoding (fewer check bits are generated when a code rate is high, and fewer decoding calculations are required). Therefore, in comparison with a conventional architecture in which coding and modulation are decoupled, an architecture in which layered encoding and layered modulation are combined can reduce total decoding complexity and improve a decoding peak throughput at the receiving end. It may be understood that the layer encoded with the higher code rate may alternatively be referred to as a higher layer, and the layer encoded with the lower code rate may be referred to as a lower layer. A name is not limited in this embodiment of this application. In the following descriptions, a manner in which the layer encoded with the higher code rate corresponds to the lower layer, and the layer encoded with the lower code rate corresponds to the higher layer is used. The layer encoded with the higher code rate may be equivalent to a layer with a higher code rate or a higher-code-rate layer, and the layer encoded with the lower code rate may be equivalent to a layer with a lower code rate or a lower-code-rate layer. For ease of description, these terms may be used interchangeably in some parts of the following content.

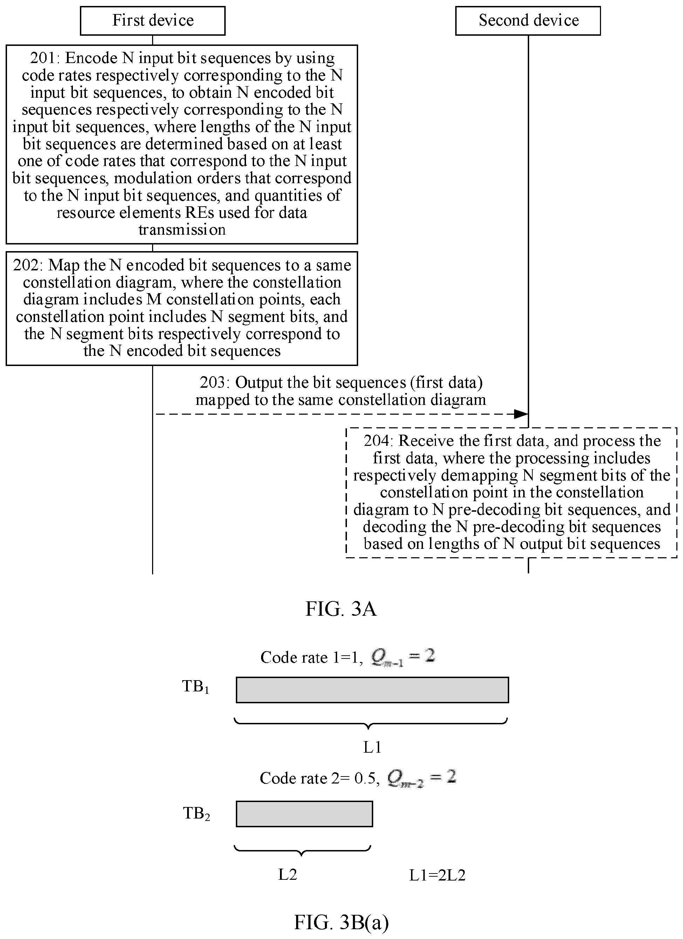

In a radio channel environment, due to impact of large-scale fading, small-scale fading, interference, and the like, a signal-to-noise ratio at the receiving end usually fluctuates significantly over time. Therefore, a code rate for encoding and a modulation order may be adjusted for channel encoding and decoding based on a channel condition. A channel condition may be matched by using a matched code rate adaptation technology, so that a layered encoding technology may be applied to wireless communication. FIG. 3A is a flowchart of a coding and modulation method according to an embodiment of this application. As shown in FIG. 3A, the method may include the following steps.

201: A first device encodes N input bit sequences by using code rates respectively corresponding to the N input bit sequences, to obtain N encoded bit sequences respectively corresponding to the N input bit sequences, where N is an integer greater than or equal to 2.

In some possible implementations, a length of each input bit sequence may be determined based on information related to the input bit sequence, and the information related to the input bit sequence includes at least one of the following: a code rate that corresponds to the input bit sequence, a modulation order that corresponds to the input bit sequence, and a quantity of resource elements REs used for data transmission. It may be understood that the length of the input bit sequence may be further determined with reference to other information. This is not limited in this embodiment of this application. Each input bit sequence may also be referred to as an input bit sequence of each layer. The input bit sequence may also be referred to as a bit sequence.

Optionally, alternatively, a total length of the N input bit sequences may be first determined, and then the length of each of the N input bit sequences is determined by using the code rates corresponding to the N input bit sequences. The total length of the N input bit sequences may be determined based on the code rate, the modulation order, and the quantity of resource elements REs used for data transmission.

202: The first device maps the N encoded bit sequences to a same constellation diagram, where the constellation diagram includes M constellation points, each constellation point includes N bit segments, the N bit segments respectively correspond to the N encoded bit sequences, and M is an integer greater than or equal to 1.

The first device in this embodiment is a device for performing information encoding, and may be specifically a network device, UE, or another encoding-capable network element, for example, a chip that may be used in the network device, or a chip that may be used in the terminal device. The input bit sequence is an input bit sequence before encoding. Optionally, encoding performed on the input bit sequence may be cyclic redundancy check (cyclical redundancy check, CRC) encoding (CRC bit padding) or other encoding (error correction encoding), or may be the CRC encoding combined with other encoding.

The code rate may also be referred to as a bit rate, which means a proportion of a useful (non-redundant) part in an encoded bit sequence.

In a possible implementation, encoding the N input bit sequences by using the respectively corresponding code rates may be understood as layered encoding or hierarchical encoding. In other words, each input bit sequence may be considered as corresponding to one layer of encoding, so that each input bit sequence has a respectively corresponding layer. Optionally, each input bit sequence may be encoded by a corresponding encoder, and an encoder for each layer may be referred to as a component encoder.

In a possible implementation, each input bit sequence may be understood as a transport block (transport block, TB). For ease of description, the input bit sequence and the TB may be used interchangeably in some parts of the following content.

The length of each TB may be related to the at least one of the following: the code rate that corresponds to the TB (in other words, a layer corresponding to the TB), the modulation order that corresponds to the TB, and the quantity of REs corresponding to data transmission, and a positive correlation relationship exists therebetween. That is, a larger value of any one of the code rate, the modulation order, and the quantity of REs indicates a larger TB.
1. Example in which the information related to the TB is any one of the code rate, the modulation order, and the quantity of REs
   a. It is assumed that the total length corresponding to the bit sequences before encoding is a fixed length, for example, D, and the bit sequences need to be segmented into N TBs. Both the modulation order and the quantity of REs of the N TBs are fixed values specified in a protocol. In this case, the length of each TB is determined according to the following formula (a): ${D}_{i} = D ∗ \frac{{R}_{i}}{{\sum }_{i = 1}^{i = N} {R}_{i}}$
      D*ᵢ* represents a length of an i^{th} TB in the N TBs, and *Rᵢ* represents a code rate of the i^{th} TB. In other words, the length of each TB is determined based on the code rate corresponding to the TB.
   b. Similarly, it is assumed that the total length of the bit sequences before encoding is D, and the code rate and the quantity of REs are fixed values. In this case, the length of each TB is determined based on the modulation order corresponding to the TB, and is specifically determined according to the following formula (b): ${D}_{i} = D ∗ \frac{{Q}_{m - i}}{{\sum }_{i = 1}^{i = N} {Q}_{m - i}}$
      *Qₘ₋ᵢ* represents a modulation order of an i^{th} TB.
   c. It is assumed that the total length of the bit sequences before encoding is D, and the code rate and the modulation order are fixed values. In this case, the length of each TB is determined based on the quantity of REs corresponding to the TB, and is specifically determined according to the following formula (c): ${D}_{i} = D ∗ \frac{{RE}_{i}}{{\sum }_{i = 1}^{i = N} {RE}_{i}}$
      *REᵢ* represents a quantity of REs of an i^{th} TB.
2. Case in which the information related to the TB includes any two of the code rate, the modulation order, and the quantity of REs
   Similar to the case in which the information related to the TB includes any one of the code rate, the modulation order, and the quantity of REs, it is assumed that the total length of the bit sequences before encoding is known (or can be obtained), and one of the foregoing three parameters is a fixed value. In this case, the information related to the TB may be the other two parameters.
3. Case in which the information related to the TB includes the code rate, the modulation order, and the quantity of REs

For example, the length of the TB may satisfy the following formula (1-1): ${N}_{inf o} = {N}_{RE - i} ⋅ {R}_{i} ⋅ {Q}_{m - i} ⋅ {υ}_{i}$
*N* _{inf *o*} represents the length of the TB, and may also be referred to as a TB size (transport block size, TBS), and *N _{RE-i}* represents a quantity that is of REs used for data transmission and that is for an i^{th} layer. For downlink transmission, *N _{RE-i}* represents a quantity of REs allocated for a physical downlink shared channel (physical downlink shared channel, PDSCH) within a physical resource block (physical resource block, PRB). For uplink transmission, *N _{RE-i}* represents a quantity of REs allocated for a physical uplink shared channel (physical uplink shared channel, PUSCH) within a PRB. Rᵢ represents a code rate corresponding to an i^{th}-layer TB. *Qₘ₋ᵢ* represents a modulation order of an i^{th} layer, to be specific, a quantity of bits, corresponding to a constellation point in a constellation diagram, to which the TB is mapped, and may also be referred to as a quantity of modulation bits. For example, it is assumed that symbol modulation of the TB corresponds to the 16QAM in FIG. 2B, and each constellation point corresponds to 4 bits. In this case, *Qₘ* =4. It is assumed that a TB₁ corresponds to a 1^{st} layer, and the TB₁ is mapped to first two bits of the constellation point. In this case, *Q*_{*m*-1} corresponding to the TB₁ is 2. It is assumed that a TB₂ corresponds to a 2^{nd} layer, and the TB₂ is mapped to last two bits of the constellation point. In this case, *Qₘ₋₂* corresponding to the TB₂ is also 2. It is assumed that symbol modulation of the TB is 256QAM, and each constellation point in the constellation diagram corresponds to eight bits. If a TB₁ corresponding to a 1^{st} layer is mapped to first two bits, *Q*_{*m*-1} corresponding to the TB₁ is 2. If a TB₂ corresponding to a 2^{nd} layer is mapped to middle two bits, *Q*_{*m-*2} corresponding to the TB₂ is 2. If a TB₃ corresponding to a 3^{rd} layer is mapped to last four bits, *Q*_{*m*-3} corresponding to the TB₃ is 4. It may be understood that *Qₘ* corresponding to each TB may be the same or may be different, and a same constellation point is obtained by mapping different TBs. *νᵢ* represents a quantity of multiple-input multiple-output (multiple-input multiple-output, MIMO) layers, that is, a quantity of allocated demodulation reference signal (demodulation reference signal, DMRS) ports. In non-MIMO transmission, the formula may not include the parameter, or a value of the parameter is a constant 1.

A parameter in the foregoing formula may also be represented by another character. For example, the code rate may also be represented by CR. This is not limited in this embodiment.

It can be learned from the foregoing formula that the information related to the TB, which is used to determine the length of the TB, includes the code rate of the TB, the modulation order of the TB, and the quantity of REs used for data transmission. Optionally, in a MIMO transmission scenario, the information related to the TB, which is used to determine the length of the TB, may further include a quantity of MIMO layers.

It can be learned that, in this embodiment of this application, the length of each of the N input bit sequences is determined based on respective corresponding related information. Then, the N input bit sequences whose lengths are determined are encoded by using the respective code rates, to obtain the N encoded bit sequences, and the N encoded bit sequences are mapped to different bit segments of the constellation point in the constellation diagram. This can ensure that data transmission for the N input bit sequences is performed based on a protection capability of each of the N bit segments of the constellation point. In addition, because a time-frequency resource allocated to each input bit corresponds to a constellation point guided by the input bit, the foregoing process enables the length of each input bit sequence to correspond to a time-frequency resource allocated to the input bit sequence, so that the input bit sequence can be transmitted on the respective corresponding time-frequency resource, thereby ensuring data transmission efficiency. Meanwhile, no additional segmentation manner is introduced to adapt to the respective time-frequency resource of each input bit sequence, thereby reducing encoding complexity at the transmitting end. In addition, protocol modifications can be minimized, thereby lowering coding implementation costs.

The N input bit sequences may be a part or all of bit sequences sent through a first channel. When the first device transmits data to a second device by mapping the N input bit sequences to the constellation point in the constellation diagram, the first channel may be understood as a channel for communication between the first device and the second device. The first channel may include one or more radio channels of a broadcast channel, a shared channel, a control channel, or the like. In other words, the N input bit sequences may be input bit sequences corresponding to a same user or same user equipment.

In this case, the second device receives, through the first channel, the data transmitted by the first device, so as to ensure a probability that the data can be correctly decoded regardless of which bit segment of the constellation point in the constellation diagram corresponds to the data.

Alternatively, one part of the N input bit sequences may be sent to the second device through the first channel, and the other part may be sent to a third device through a second channel. The first part of the input bit sequences and the other part of the input bit sequences correspond to different bit segments of the constellation point. In addition, in the input bit sequences, one part of the input bit sequences corresponding to a bit segment with a higher code rate (higher transmission reliability) may be sent to the second device farther from the first device, and the other part of the input bit sequences corresponding to a bit segment with a lower code rate (lower transmission reliability) may be sent to the third device closer to the first device. In this way, reliability of long-distance communication transmission can be further ensured.

It should be understood that the foregoing descriptions are all examples. The method described in the foregoing embodiment may be further applied to more communication scenarios, including one-to-many (including two or more), many-to-many, relay transmission, or the like. This is not specifically limited in this embodiment of this application.

In some possible implementations, it is assumed that the quantity of resource elements (resource elements, REs) used for data transmission is S. After symbol modulation, all symbol sequences need to be mapped to the S REs for transmission, and each constellation point corresponds to one RE. Therefore, when N TBs are respectively mapped to all constellation points (specifically, mapped to one bit segment of M bit segments) in a same constellation diagram, time-frequency resources of all the TBs are aligned (equal). That is, a quantity of REs of each TB is S.

For example, assuming that the N TBs are a TB₁ and a TB₂, an encoded bit sequence corresponding to the TB₁ may be mapped to first two bits of each of 16 constellation points 0000 to 1111, and an encoded bit sequence corresponding to the TB₂ may be mapped to last two bits of each of the 16 constellation points 0000 to 1111. It may be understood that the first two bits and the last two bits may all be referred to as bit segments. In this case, each TB is mapped to each constellation point, and a time-frequency resource of each TB is the same as a time-frequency resource occupied by a symbol sequence.

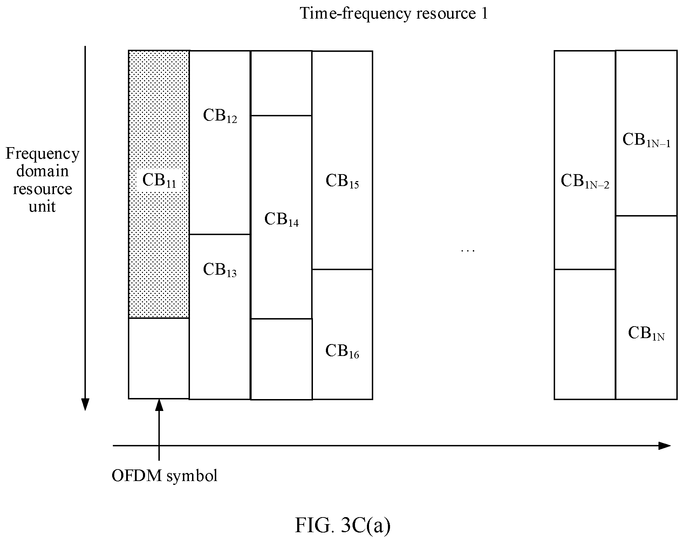

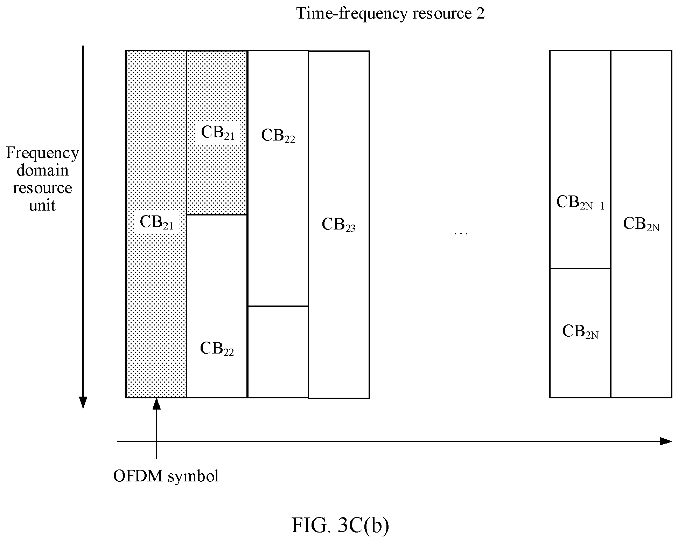

FIG. 3C(a) and FIG. 3C(b) are diagrams of time-frequency resources of different TBs after layered encoding according to an embodiment of this application. As shown in FIG. 3C(a), it is assumed that there is a time-frequency resource 1 corresponding to the encoded bit sequence of the TB₁. In FIG. 3C(b), there is a time-frequency resource 2 corresponding to the encoded bit sequence of the TB₂. The time-frequency resource 1 and the time-frequency resource 2 have a same quantity of orthogonal frequency division multiplexing (orthogonal frequency division multiplexing, OFDM) symbols, a same quantity of frequency domain resource units (subcarriers), and the time-frequency resource 1 and the time-frequency resource 2 are aligned.

Therefore, in this embodiment of this application, the length of each TB may be determined based on a premise that quantities of REs of TBs of all layers are the same (time-frequency resources are aligned), so that a maximum throughput can be achieved on an encoding side.

In addition, it is assumed that each TB corresponds to a same quantity of MIMO layers (constant at 1). In this case, *N_{inf o}* for different TBs is determined based on *Rᵢ·Qₘ₋ᵢ.* Therefore, the foregoing formula (1-1) may also be transformed into the following formula (1-2): ${N}_{inf o} = {N}_{RE} ⋅ {R}_{i} ⋅ {Q}_{m - i}$

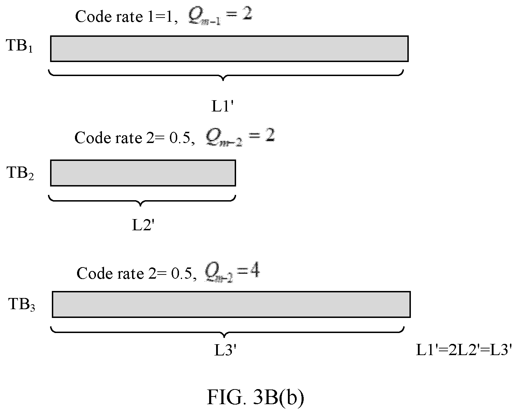

FIG. 3B(a) and FIG. 3B(b) are diagrams of relationships between different TB lengths according to an embodiment of this application. As shown in FIG. 3B(a), it assumed that a code rate corresponding to a TB₁ is 1, and a code rate corresponding to a TB₂ is 0.5. In this case, when *Q*_{*m*-1} corresponding to the TB₁ is 2, and Qₘ₋₂ corresponding to the TB₂ is also 2, *N*_{*info-*1} (L1 in the figure) corresponding to the TB₁ is equal to two times *N*_{*info-*2} (L2 in the figure) (that is, a proportional relationship of TB lengths is determined based on a proportional relationship of code rates).

Alternatively, as shown in FIG. 3B(b), it is assumed that quantities of bits, in a constellation point, to which a TB₁ to a TB₃ are mapped to are 2, 2, and 4 respectively, that is, *Q*_{*m-*1} *=2, Qₘ₋₂ =2,* and *Q*_{*m-*3} =4*,* and code rates are respectively R1=1, R2=0.5, and R3=0.5. In this case, *N*_{*info-*1} (L1' in the figure) corresponding to the TB₁ is two times *N*_{*info*-2} (L2' in the figure) corresponding to a TB₂, and is equal to *N*_{*info-*3} (L3' in the figure) corresponding to the TB₃.

In some other possible cases, it is assumed that a part of the N TBs are not mapped to each constellation point in the constellation diagram, and are mapped only to bit segments of some constellation points; and another part of the TBs are mapped to other bit segments of these constellation points, and are independently mapped to some constellation points. For example, a TB₁ is mapped only to first two bits of eight constellation points 0000 to 0111 in 16QAM, and a TB₂ is mapped to last two bits of seven constellation points 0000 to 0111, and is also independently mapped to eight constellation points 1000 to 1111. In this case, time-frequency resources of the TB₁ and the TB₂ are not aligned, and quantities of REs are different.

In other words, in this case, a length of the TB₂ may be calculated in two parts, where one part corresponds to a case of mapping to the bit segments of the constellation points, and the other part corresponds to a case of mapping to all bits of the constellation points. Different modulation orders corresponding to the two parts are different, and quantities of REs corresponding to the two parts may be the same (in a case in which REs are divided equally between the two parts) or may be different.

In still another possible implementation, the total length *N* _{info*-*total} of the N input bit sequences may be determined according to the following formula (1-3), and then the length of each of the N input bit sequences is determined based on a code rate of each layer. ${N}_{inf o - total} = {N}_{RE} ⋅ R ⋅ {Q}_{m} ⋅ υ$

Based on the obtained *N* _{inf*o-*total} , division may be performed based on the code rate of each layer and a proportion corresponding to the code rate, to obtain the length of each input bit sequence. For example, assuming that a code rate corresponding to the TB₁ is two times that of the TB₂, a length of the TB₁ may be two times that of the TB₂.

It may be understood that the foregoing formulas (1-1), (1-2), and (1-3) may have other variants. For example, a parameter on the right side of the formula is transformed to a parameter on the left side of the equation. For another example, based on the foregoing formula, there may be another coefficient, offset, or the like on the left side and/or on the right side of the formula. Examples are not enumerated in this embodiment of this application.

In some cases, the method in this embodiment of this application further includes: determining the information related to the input bit sequence.

It can be learned from the foregoing descriptions that a length of a TB (an input bit sequence) may be determined based on information related to the TB. Therefore, before the length of the TB is determined, the information related to the TB may be first determined.

When the first device is the network device, the first device may directly obtain information related to each TB, including a code rate of the TB, a modulation order of the TB, a quantity of REs, and the like. In some possible implementations, there may be a correspondence between an MCS index, and the code rate and the modulation order of the TB. In this case, the first device may first determine the MCS index corresponding to the TB, and then determine a code rate and a modulation order that correspond to the MCS index as the code rate and the modulation order of the TB.

When the first device is the UE, the information related to the TB may be indicated by a network device.

Optionally, the information related to the TB may be indicated by signaling. The signaling may be, for example, at least one of higher layer signaling and downlink control information (downlink control information, DCI). The higher layer signaling is, for example, master information block (master information block, MIB), system information block (system information block, SIB), or radio resource control (radio resource control, RRC) signaling. The DCI includes uplink DCI or downlink DCI, where the uplink DCI is control information that is sent on a network side and that is used to schedule a PUSCH, and the downlink DCI is control information indicating a configuration parameter related to a PDSCH on the network side. In addition, in a scenario of UE-to-UE communication, the information related to the TB may further be indicated by sidelink control information (sidelink control information, SCI). The higher layer signaling indicates the information related to the TB, so that an amount of sent signaling can be reduced. The DCI or the SCI indicates the information related to the TB, so that configuration flexibility of the information related to the TB can be ensured. Alternatively, configuration may be performed in combination with the foregoing two manners.

The network device may indicate the quantity of REs in the TB by using a quantity of resource blocks (resource blocks, RBs) indicated in the DCI. For example, one RE corresponds to one symbol and one subcarrier. That one slot includes 14 symbols is used as an example. Therefore, one RB may correspond to 168 REs in one slot. Among the 168 REs, one part is used for data transmission, and the other part is used to carry a demodulation reference signal (demodulation reference signal, DMRS) and other information. Therefore, in the DCI, a quantity of REs that can be used for data transmission and that correspond to one RB in one slot may be less than 168.

The foregoing various data is an example. It should be understood that the data may also be converted into other data. For example, when one slot includes 13 symbols, related data is correspondingly converted. Details are not enumerated herein.

As described above, there may be the correspondence between the MCS index, and the code rate and the modulation order of the TB. For such a correspondence, refer to the following Table 1 and Table 2.

**Table 1: Code rate and modulation order of the TB₁**

| **MCS index** | **Modulation order *Qₘ*** | **Code rate *R*** |
|---|---|---|
| **0** | 2 | 0.05 |
| **1** | 2 | 0.1 |
| **...** | ... | ... |
| **N** | 8 | 0.95 |

**Table 2: Code rate and modulation order of the TB₂**

| **MCS index** | **Modulation order *Qₘ*** | **Code rate *R*** |
|---|---|---|
| **0** | 0 | -- |
| **1** | 2 | 0.05 |
| **...** | ... | ... |
| **N** | 4 | 0.8 |

Table 1 and Table 2 show correspondences between a plurality of groups of (possible) code rates and modulation orders of different TBs, and a plurality of MCS indexes, to form a correspondence set of each TB. Each group of a code rate and a modulation order of a TB may be indicated by one MCS index.

In Table 1 and Table 2, the MCS indexes of the different TBs are independently encoded, and the different TBs may correspond to a same MCS index value. Therefore, the network device may further indicate, by using other information, the TB corresponding to the MCS index. Specifically, for example, one bit is added to an MCS index indication field, to indicate a corresponding TB. When a quantity of the N TBs is greater than 2, a plurality of bits may be further added, to indicate the TB corresponding to the MCS index.

It may be understood that different correspondence sets may be used for the plurality of TBs in the foregoing example, or a same correspondence set may be used for the plurality of TBs, in other words, one set of correspondences between MCS indexes, and code rates and modulation orders is applicable to the plurality of TBs.

The correspondence set is generated based on different TBs. In another possible implementation, the correspondence set may alternatively be generated by using different information related to the TB.

Refer to the following Table 3 and Table 4:

**Table 3: Correspondence set of modulation orders**

| **MCS index** | **Modulation order *Qₘ*** |
|---|---|
| **0** | 1 |
| **1** | 2 |
| **2** | 3 |
| **...** | ... |
| **N** | 8 |

**Table 4: Correspondence set of code rates**

| **MCS index** | **Code rate *R*** |
|---|---|
| **N+1** | 0.05 |
| **N+2** | 0.1 |
| **...** | ... |
| **N+j** | 0.95 |

Table 3 and Table 4 are sets of correspondences between MCS indexes, and modulation orders and code rates respectively. The MCS index may correspond to the modulation order, or may correspond to the code rate. There is no correspondence between the modulation order and the code rate. A modulation order and a code rate that correspond to a TB are respectively indicated by two MCS indexes carried in signaling.

In still another possible implementation, a correspondence set of another type of information related to a TB, which corresponds to each type of information related to the TB, may be generated. Specifically, for example, a correspondence set of code rates corresponding to different modulation orders is generated, or a correspondence set of modulation orders corresponding to different code rates is generated.

For example, it is assumed that when a modulation order is 2, a correspondence set of code rates of the modulation order includes code rates R₁₁ to R₁₄ corresponding to MCS indexes 0 to 3; and when a modulation order is 4, a correspondence set of code rates of the modulation order includes code rates R₂₁ and R₂₂ corresponding to MCS indexes 0 and 1. When the modulation order of the TB is determined, a selectable code rate of the TB is determined based on a correspondence set of a code rate corresponding to the modulation order.

Similarly, it is assumed that when a code rate is 0.1, a correspondence set of modulation orders of the code rate includes modulation orders *Q*_{*m*-1} to *Q*_{*m*-4} corresponding to MCS indexes 0 to 3; and when a code rate is 0.5, a correspondence set of modulation orders of the code rate includes modulation orders *Q*_{*m*-1} and *Q*_{*m*-2} corresponding to MCS indexes 0 and 1. When the code rate of the TB is determined, a selectable modulation order of the TB is determined based on a correspondence set of a modulation order corresponding to the code rate.

In addition, MCS indexes corresponding to different information related to the TB may be consecutively numbered. For example, it is assumed that the MCS indexes may indicate 16 index values, first eight index values are used to correspond to modulation orders, and last eight indexes are used to correspond to code rates.

The MCS indexes corresponding to the different information related to the TB may alternatively be independently numbered. In a possible implementation, one bit may be further allocated to indicate the information related to the TB corresponding to the correspondence set. For example, when a value of the bit is 0, it indicates that the correspondence set corresponds to the modulation order; and when the value of the bit is 1, it indicates that the correspondence set corresponds to the code rate.

For example, the signaling carrying the MCS index is DCI. The DCI may include an MCS index indication field of F (for example, 5) bits. It may be understood that the F-bit indication field may be an existing bit in the DCI, or may be a newly added bit in the DCI, or may be a combination of an existing bit and a newly added bit. For example, the code rate of the TB is indicated by an MCS index corresponding to existing three bits, and the modulation order of the TB is indicated by an MCS index corresponding to newly added two bits. Similarly, indication fields indicating different layers may also be existing bits or newly added bits in the DCI, or a combination of an existing bit and a newly added bit (for example, if there are two or fewer layers, the existing bit is used for indication, and if there are more than two layers, the newly added bit is used for indication).

It may be understood that the foregoing example applicable to the DCI is also applicable to the SCI. Details are not described herein again.

It can be learned that in this embodiment of this application, the MCS index indication field in the DCI indicates the information related to the TB. In one aspect, the MCS index indication field is an existing field in the DCI, so that an existing MCS index can be fully used, a quantity of newly added fields in the DCI is reduced, and signaling overhead is reduced. In another aspect, assuming that the MCS index indication field is a newly added field, flexibility of setting the MCS index can be improved, a quantity of semantic changes of an existing field in the DCI can be reduced, and implementation complexity can be reduced. In still another aspect, assuming that the MCS index is a combination of an existing field and a newly added field, advantages of the foregoing two may be included, and flexibility of sending the MCS index through the DCI is improved while signaling overhead is reduced.

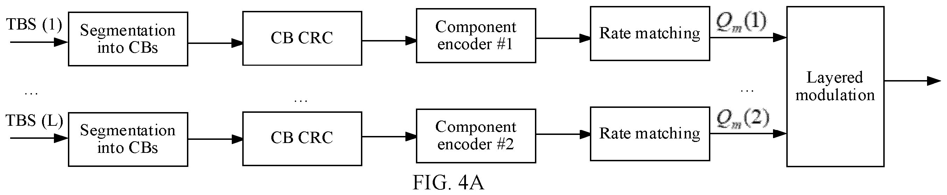

The foregoing embodiment describes a coding and modulation process of the input bit sequence (TB). FIG. 4A is a block diagram of a layered encoding and modulation procedure. As shown in FIG. 4A, the following steps may be specifically included:
1. Determine a size of each TB in N TBs, to be specific, a length of an original information bit sequence of each TB (before encoding is performed).
2. Perform CRC bit padding (or referred to as CRC encoding) on each TB, to generate a TB-CRC check bit attached to a tail of each TB.
3. Segment each TB to which a CRC bit is added into a plurality of CBs.
4. Perform CRC bit padding on each CB, to generate a CB-CRC check bit attached to a tail of each CB (the CB with the attached CB-CRC check bit may be referred to as an encoded bit sequence of the CB), and then input each CB-CRC to a component encoder for encoding, for example, LDPC encoding.
5. Perform rate matching on the encoded bit sequence of each CB.
6. Map a bit sequence after rate matching to a constellation diagram.

The CRC encoding is used to perform error check, and the CRC in Step 2 and Step 4 may be optional. The LDPC encoding is used for error correction. Therefore, the foregoing two types of encoding may also refer to other corresponding encoding of a same category. Details are not described herein.

It can be learned from the foregoing procedure that the TB may be segmented into the plurality of CBs, and that the encoded bit sequence of the TB is mapped to the constellation diagram may be considered as that an encoded bit sequence of the plurality of CBs is mapped to the constellation diagram.

In a process of encoding and decoding the TB, a TB with a higher code rate indicates higher efficiency of CB information transmission, the TB with the higher code rate may be segmented into a relatively large quantity of CBs, and a single CB occupies a relatively small time-frequency resource. However, a TB with a lower code rate corresponds to a relatively small quantity of CBs, and a single CB occupies a relatively large time-frequency resource. The TB with the higher code rate and the TB with the lower code rate are mapped to a same constellation point in a same constellation diagram, and are sent to a same decoder side through the first channel. After obtaining a complete bit sequence of a constellation point, the decoder side may perform decoding. In other words, a receiving end performs iterative decoding, in which a layer (a lower layer) with a relatively higher code rate is first demodulated, and then a layer (a higher layer) with a relatively lower code rate is demodulated. For a CB as a minimum unit for demodulation and decoding, if there is a large gap between a time-frequency resource boundary of a higher-layer CB and a time-frequency resource boundary of a lower-layer CB, a long waiting delay may be required to complete iterative decoding of different CBs of the two layers, thereby reducing a decoding throughput.

Optionally, to reduce a delay between arrivals of CBs of different TBs at the decoder side to improve decoding efficiency, in this embodiment, time-frequency resources of the CBs of the different TBs may be further aligned by using different methods (alignment means reducing a difference, and the resources may be equal or may be unequal).

In a possible implementation, a maximum length of an encoded bit sequence of the CB of the TB with the relatively lower code rate is adjusted or determined, so that a time-frequency resource of the CB of the TB with the relatively lower code rate is aligned with a time-frequency resource of the CB of the TB with the relatively higher code rate. The adjustment may be performed based on a maximum length of an encoded bit sequence of a CB which is first determined. The determining may refer to using the maximum length of the encoded bit sequence of the CB starting from initial encoding. Specifically, the determining includes: directly obtaining the maximum length from the transmitting end, obtaining the maximum length based on indication information of a peer end, determining the maximum length based on indication information of a peer end and a calculation process, or the like. This is not specifically limited in this embodiment of this application.

In some possible implementations, each of the N input bit sequences is segmented into Hᵢ code blocks CBs, and each encoded bit sequence includes encoded bit sequences of the Hᵢ CBs, where a value of i ranges from 0 to N, indicating an i^{th} input bit sequence in the N input bit sequences. The N input bit sequences include a reference bit sequence and another bit sequence other than the reference bit sequence, and a maximum length of an encoded bit sequence of a CB corresponding to the another bit sequence is determined based on a maximum code block constraint value and a specific constant, or a maximum length of an encoded bit sequence of a CB corresponding to the another bit sequence is determined based on a maximum code block constraint value and a specific ratio.

There are two cases. In a first case, when a code rate of the reference bit sequence is higher than a code rate of the another bit sequence, the maximum length of the encoded bit sequence of the CB corresponding to the another bit sequence is determined based on a ratio of the maximum code block constraint value to a first constant, or the maximum length of the encoded bit sequence of the CB corresponding to the another bit sequence is determined based on the maximum code block constraint value and a first value (ratio).

It may be understood that the reference bit sequence is an input bit sequence that is in the N input bit sequences and whose maximum length of an encoded bit sequence of a CB does not need to be determined or adjusted based on a value of the code rate.

For example, it is assumed that the N input bit sequences (TBs) include a first input bit sequence (a first TB) and a second input bit sequence (a second TB), where a code rate of the first TB is higher than a code rate of the second TB. In this case, the first TB is used as a reference bit sequence, the second TB is used as another bit sequence, and a maximum length of an encoded bit sequence of a CB corresponding to the second TB needs to be adjusted or determined.

As described above, the length of the encoded bit sequence of the CB refers to a time-frequency resource occupied by the CB. In this case, in this embodiment of this application, the length of the encoded bit sequence of the CB may refer to a length of the encoded bit sequence, corresponding to the CB, that is obtained by encoding the CB after the TB is segmented to obtain the CB. If encoding does not need to be performed, the length of the encoded bit sequence of the CB may be a length of the CB that is obtained by directly segmenting the TB.

In a possible implementation, in this embodiment, a difference between time-frequency resources of CBs of different layers may be reduced by constraining the TB with the lower code rate to have a smaller maximum length of the encoded bit sequence of the CB.

In the conventional technology, the maximum length of the encoded bit sequence of the CB of the TB is determined based on the maximum code block constraint value. It is assumed that the maximum code block constraint value is I, for example, I=8448 bits. In this embodiment of this application, the maximum length of the encoded bit sequence of the CB of the TB with the lower code rate may be less than the maximum code block constraint value.

For example, the length of the CB of the second TB may be constrained in the following manners:
1. The maximum length of the encoded bit sequence of the CB corresponding to the second TB is determined based on a ratio of the maximum code block constraint value to the first constant.

If the maximum code block constraint value is I, the maximum length of the encoded bit sequence of the CB of the second TB meets the following formula (2-1): $K {′}_{cb} = \frac{I}{n} , n = 2 , 4 , 8 , 16 , …$

*K*'_{cb} represents the maximum length of the encoded bit sequence of the CB of the second TB, and *n* is a constant value. Optionally, *n* may be a power of 2, but *n* is not greater than 8448. A unit of the foregoing formula is bit (which is applicable to the following formulas).

A current maximum code block constraint value is 8448 bits. Therefore, the formula (2-1) may also be transformed into the following formula (2-2): $K {′}_{cb} = \frac{8448}{n} , n = 2 , 4 , 8 , 16 , …$

It should be understood that 8448 in the following formulas may also vary according to the maximum code block constraint value Q. Details are not described subsequently.

Alternatively, the maximum length of the encoded bit sequence of the CB of the second TB meets the following formula (3): $K {′}_{cb} = \left⌈\frac{8448}{n}\right⌉ , n = 1 , 2 , 3 , 4 , …$

*K*'_{cb} represents the maximum length of the encoded bit sequence of the CB of the second TB, and *n* is a constant value. Optionally, *n* may be a positive integer whose value is not greater than 8848, and a unit of the foregoing formula is bit. ┌ ┐ represents a ceiling function. It may be understood that, if $\left⌈\frac{8448}{n}\right⌉$ is an integer, there may be no ceiling operation, that is, $K {′}_{cb} = \frac{8448}{n}$ .

Alternatively, the ceiling function in the formula (3) may be replaced with a floor function └ ┘, or in another function form. This is not limited in this embodiment of this application. It may be understood that, if $\frac{8448}{n}$ is an integer, there may be no ceiling or floor operation, that is, $K {′}_{cb} = \frac{8448}{n}$*.*

2. The maximum length of the encoded bit sequence of the CB corresponding to the second TB is determined based on the maximum code block constraint value and the first value, where the first value is determined based on a ratio of a length of the second TB to a length of the second TB.

Using an example in which the maximum code block constraint value is 8448 bits, the maximum length of the encoded bit sequence of the CB corresponding to the second TB may satisfy the following formula (4): $K {′}_{cb} = \left⌈8448⋅\frac{{R}_{2} ⋅ {Q}_{m - 2}}{{R}_{1} ⋅ {Q}_{m - 1}}\right⌉$

R(2) represents the code rate corresponding to the second TB (the lower layer), and Qₘ(2) represents a modulation order corresponding to the second TB. R(1) represents the code rate corresponding to the first TB (the higher layer), and *Qₘ*(1) represents a modulation order corresponding to the first TB. $\frac{R \left(2\right) ⋅ {Q}_{m} \left(2\right)}{R \left(1\right) ⋅ {Q}_{m} \left(1\right)}$ is the first value. In this embodiment of this application, because quantities of REs allocated to different layers (in other words, different TBs) are the same, the ratio of the TB length of the second TB to the TB length of the first TB is determined based on a ratio of a product of the code rate and the modulation order of the second TB to a product of the code rate and the modulation order of the first TB.

Alternatively, the maximum length of the encoded bit sequence of the CB corresponding to the second TB may satisfy the following formula (5): $K {′}_{cb} = p ⋅ \left⌈8448⋅\frac{{R}_{2} ⋅ {Q}_{m - 2}}{{R}_{1} ⋅ {Q}_{m - 1} . m}\right⌉$
*p* may be a positive integer, and m may also be a positive integer. In addition, both p and m may exist in the formula, or only one of p and m may exist in the formula. The ceiling function ┌ ┐ in the foregoing formulas (4) and (5) may alternatively be replaced with a floor function └ ┘, or in another function form. This is not limited in this embodiment of this application. It may be understood that, if $\left⌈8448⋅\frac{{R}_{2} ⋅ {Q}_{m - 2}}{{R}_{1} ⋅ {Q}_{m - 1} . m}\right⌉$ is an integer, there may be no ceiling or floor operation, that is, $K {′}_{cb} = 8448 p ⋅ \frac{{R}_{2} ⋅ {Q}_{m - 2}}{{R}_{1} ⋅ {Q}_{m - 1} . m}$.

In some cases, it is assumed that the N TBs include a third TB, and a code rate corresponding to the third TB is not the highest code rate among the first TB, the second TB, and the third TB. In this case, the first TB may still be used as the reference bit sequence, and the third TB may be used as still another bit sequence. A maximum length of an encoded bit sequence of a CB of the third TB is adjusted or determined, so that a time-frequency resource of the CB of the third TB is aligned with a time-frequency resource of a CB of the first TB. For a formula for adjusting or determining the length of the CB of the third TB, refer to the foregoing formulas (2-1) to (5). Details are not described herein again.

Corresponding to the foregoing embodiment, in a possible implementation, in this embodiment, a difference between time-frequency resources of CBs of different layers may be reduced by constraining the TB with the higher code rate to have a larger maximum length of the encoded bit sequence of the CB.

In other words, in the other case, when the code rate of the reference bit sequence is lower than the code rate of the another bit sequence, the maximum length of the encoded bit sequence of the CB corresponding to the another bit sequence is determined based on a product of the maximum code block constraint value and a second constant, or the maximum length of the encoded bit sequence of the CB corresponding to the another bit sequence is determined based on the maximum code block constraint value and a second value (ratio), where the second value is determined based on a ratio of a length of the reference bit sequence to a length of the another bit sequence.

For example, it is assumed that N TBs include a first TB and a second TB, where a code rate of the first TB is higher than a code rate of the second TB, the second TB is used as a reference bit sequence, and the first TB is used as another bit sequence.

A length of a CB of the first TB may be specifically constrained in the following two manners:
1. The maximum length of an encoded bit sequence of the CB corresponding to the first TB is determined based on a product of the maximum code block constraint value and the second constant.

It is assumed that the maximum code block constraint value is 8448 bits. In this case, the maximum length of the encoded bit sequence of the CB of the first TB may satisfy the following formula (6): $K {′}_{cb} = 8448 ⋅ n , n = 2 , 4 , 8 , 16 , …$

Same as the descriptions of the foregoing formula (2), n is a constant value, and a specific value herein is a power of 2.

2. The maximum length corresponding to the CB of the first TB is determined based on the maximum code block constraint value and the second value, where the second value is determined based on a ratio of a length of the first TB to a length of the second TB.

Using an example in which the maximum code block constraint value is 8448 bits, the maximum length of the encoded bit sequence of the CB corresponding to the first TB may satisfy the following formula (7): $K {′}_{cb} = \left⌈8448⋅\frac{{R}_{1} ⋅ {Q}_{m - 1}}{{R}_{2} ⋅ {Q}_{m - 2}}\right⌉$$\frac{{R}_{1} ⋅ {Q}_{m - 1}}{{R}_{2} ⋅ {Q}_{m - 2}}$ represents the second value. The ceiling function ┌ ┐ in the formula may alternatively be replaced with a floor function └ ┘, or in another function form. It may be understood that, if $8448 ⋅ \frac{{R}_{1} ⋅ {Q}_{m - 1}}{{R}_{2} ⋅ {Q}_{m - 2}}$ is an integer, there may be no rounding function, that is, $K {′}_{cb} = 8448 ⋅ \frac{{R}_{1} ⋅ {Q}_{m - 1}}{{R}_{2} ⋅ {Q}_{m - 2}}$ .

Alternatively, the maximum length of the encoded bit sequence of the CB corresponding to the first TB may satisfy the following formula (8): $K {′}_{cb} = p ⋅ \left⌈8448⋅\frac{{R}_{1} ⋅ {Q}_{m - 1}}{{R}_{2} ⋅ {Q}_{m - 2} . m}\right⌉$
*p* may be a positive integer, and m may also be a positive integer. In addition, both *n* and m may exist in the formula, or only one of *n* and *m* may exist in the formula. Similarly, the ceiling function ┌ ┐ in the formula may alternatively be replaced with a floor function └ ┘, or in another function form. This is not limited in this embodiment of this application. If $8448 ⋅ \frac{{R}_{1} ⋅ {Q}_{m - 1}}{{R}_{2} ⋅ {Q}_{m - 2} . m}$ is an integer, there may be no rounding function, that is, $K {′}_{cb} = 8448 p ⋅ \frac{{R}_{1} ⋅ {Q}_{m - 1}}{{R}_{2} ⋅ {Q}_{m - 2} . m}$.

In addition, in the foregoing formulas (3), (4), (5), (7), and (8), 8488 in ┌ ┐ may alternatively be outside ┌ ┐.

In some cases, it is assumed that the N TBs include a fourth TB, and a code rate corresponding to the fourth TB is not the lowest code rate among the first TB, the second TB, and the fourth TB. In this case, the fourth TB may also be used as another bit sequence. A maximum length of an encoded bit sequence of a CB of the fourth TB is adjusted or determined, so that a time-frequency resource of the CB of the fourth TB is aligned with a time-frequency resource of the CB of the second TB. For a formula for adjusting or determining the length of the CB of the fourth TB, refer to the foregoing formulas (6) to (8). Details are not described herein again.

In some other possible cases, it is assumed that the N TBs include a first TB, a second TB, and a third TB, and code rates of the first TB, the second TB, and the third TB are sorted in descending order as R1>R2>R3. In this case, the second TB may be used as a reference bit sequence, and the first TB and the third TB are used as other bit sequences. Adjusting or determining a maximum length of an encoded bit sequence of a CB corresponding to the first TB and a maximum length of an encoded bit sequence of a CB corresponding to the third TB includes constraining the first TB to have a larger maximum length of the encoded bit sequence of the CB, and constraining the third TB to have a smaller maximum length of the encoded bit sequence of the CB.

In some other possible cases, it is assumed that the N TBs include a first TB, a second TB, a third TB, and a fourth TB, and code rates of the first TB, the second TB, the third TB, and the fourth TB are sorted in descending order as R1>R2>R3>R4. In this case, any one of the four TBs may be used as a reference bit sequence, to adjust a maximum length of an encoded bit sequence of a CB of another TB. Alternatively, a maximum length of an encoded bit sequence of a CB of all or some TBs is determined or adjusted by using an average code rate of some or all the TBs as a reference.

These possible cases are all applicable to the foregoing formulas (2-1) to (8), and details are not described herein again. In addition, "larger" and "smaller" are described by using the maximum code block constraint value as a reference, or by using a maximum length of an encoded bit sequence of a CB of the reference bit sequence as a reference. All the above related descriptions are applicable to this explanation.

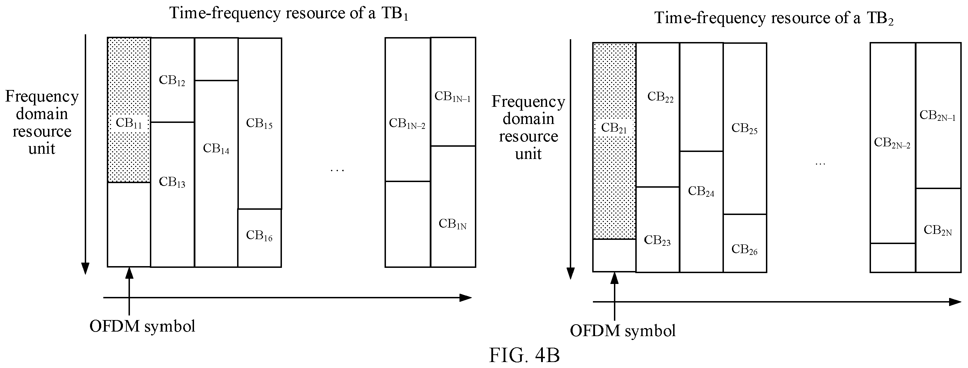

After the foregoing process of determining or adjusting the another bit sequence, the difference between time-frequency resources of the encoded bit sequences of the CBs of the different TBs is reduced. FIG. 4B is a diagram of time-frequency resources of different TBs after another type of layered modulation according to an embodiment of this application. As shown in FIG. 4B, by limiting maximum lengths of encoded bit sequences of CBs of different TBs, both a CB₁₁ of a TB₁ and a CB₂₁ of a TB₂ occupy a same OFDM symbol, so that time-domain resources are the same, and quantities of REs occupied in frequency domain are different but correspond to a same RB, thereby overall reducing a difference between time-frequency resources of the different TBs.

It can be learned that, in this embodiment of this application, the difference between the time-frequency resources of the CBs of the different TBs is reduced by reducing a maximum CB length limit corresponding to the TB of a lower-code-rate layer or by increasing a maximum CB length limit of the TB of a higher-code-rate layer, thereby reducing the delay between the arrivals of the CBs of the different TBs at the receiving end, and improving decoding efficiency or a decoding throughput of the receiving end.

It can be learned from the foregoing descriptions that the method further includes: The first device determines a maximum length of encoded bit sequences of CBs corresponding to the N input bit sequences, including determining a maximum length of the encoded bit sequence of the CB corresponding to the reference bit sequence, and a maximum length of the encoded bit sequence of the CB corresponding to the another bit sequence in the N input bit sequences.

In some possible implementations, the first device may determine, based on the maximum code block constraint value, the maximum length of the encoded bit sequence of the CB corresponding to the reference bit sequence. Then, the first device determines code block-related information, and determines the maximum length of the another bit sequence based on the code block-related information, where the code block-related information includes the maximum code block constraint value, and further includes at least one of the following: a first constant, a first value, a second constant, and a second value.

In some possible implementations, when the first device is the network device or the UE, parameters related to the foregoing formulas (2-1) to (8), including *K*'*_{cb}*, the maximum code block constraint value of the CB, the first constant, the second constant, the first value or a related parameter used to determine the first value, the second value or a related parameter used to determine the second value, and a corresponding calculation formula (which may be unnecessary to be determined if *K*'*_{cb}* can be directly obtained), may be determined through pre-configuration (agreement in a protocol), or may be selected and determined by the first device based on information such as a current transmission environment, channel quality, or a time-frequency resource.

Alternatively, when the first device is the UE, parameters related to the formulas (2-1) to (8) may be determined by using an indication (a configuration) on a network side.

For example, because *K*'*_{cb}* corresponding to the foregoing formulas (2-1), (2-2), (3), and (6) is mainly related to the maximum code block constraint value I and the constant, the second device may configure a related parameter (I, the constant, or *K*'*_{cb}*) in the formulas for the first device, and the first device may determine, based on the related parameter, the maximum length of the encoded bit sequence of the CB corresponding to the TB. Alternatively, the second device may first generate a correspondence between the related parameter and an index value, and then indicate a corresponding related parameter by using an index value in higher layer signaling or DCI.

For example, it is assumed that a set of generated correspondences between related parameters and index values is as follows Table 5:

**Table 5 Correspondence set of the related parameters**

| **Index value** | *K*'*_{cb}* |
|---|---|
| **0** | 8448 |
| **1** | 4224 |
| **...** | ... |
| **A** | 8448/2^{A} |

In this case, the index value 1 may indicate that the maximum length of the encoded bit sequence of the CB corresponding to the TB is 4224.

Alternatively, the second device may configure the correspondence set of the related parameters for the first device, and the first device determines, based on a transmission requirement of the first device, a related parameter corresponding to a specific index value as a parameter related to the TB. This is not specifically limited herein.

The foregoing parameter may be configured in the following two manners:
1. Semi-static configuration, in which, for example, information related to the foregoing parameter may be indicated by the higher layer signaling.

In this embodiment, the second device performs data transmission with the first device, is a device for performing information decoding, and may be specifically a network device, UE, or another encoding-capable network element, for example, a chip that may be used in the network device, or a chip that may be used in the terminal device.

The higher layer signaling may include the MIB, the SIB, or the RRC signaling described above. When the second device is the network device, the second device may broadcast the related parameter to the first device via the higher layer signaling.

Alternatively, the second device may configure the related parameter for the first device via the RRC signaling when the first device performs random access.

2. Dynamic configuration, in which, for example, the information related to the parameter is indicated by the DCI or SCI, where the DCI includes uplink DCI or downlink DCI; or the information related to the parameter may be indicated by the SCI.

It is assumed that the second device is the network device, or the second device is UE in vehicle to X (vehicle to X, V2X) communication. In this case, the second device may send the DCI or SCI to the first device, to schedule the first device to perform data transmission. In addition, the DCI or SCI sent by the second device to the first device may include the foregoing related parameter.

In the foregoing two configuration methods, the former can improve configuration efficiency and reduce signaling overhead; and the latter can improve configuration flexibility, and the related parameter is updated at any time. Alternatively, the related parameter may be configured in a combination of the manner 1 and the manner 2. To be specific, initial configuration of the related parameter is implemented by using the higher layer signaling broadcast by the second device, and then when the second device performs communication transmission with the first device, the DCI is sent to indicate to update the related parameter initially configured in the first device. Adopting this method can combine advantages of both the foregoing manners.

However, in the foregoing formulas (4), (5), (6), (7), and (8), determination of *K*'*_{cb}* depends on parameters such as code rates, modulation orders, and REs of different TBs, and indication manners of these parameters may be as described above. Other parameters in these formulas, for example, p or m, may also be indicated in a manner the same as the related parameters in the formulas (2-1), (2-2), (3), and (6). Based on these parameters and manners of determining the maximum length of the encoded bit sequence of the CB (corresponding to the foregoing formulas (2-1) to (8)), where each of these formulas may alternatively be indicated by one formula index value, there is a set of correspondences between formula index values and formulas, and the set includes a plurality of formula index values, and a correspondence between each formula index value and the formula), the first device may determine a maximum length limit of the encoded bit sequence of the CB.

The foregoing method describes a method for improving the decoding throughput of the decoder side by aligning the time-frequency resources of the CBs of the different TBs.

In some possible implementations, the time-frequency resources of the CBs of the different TBs may be completely aligned to further improve the decoding throughput of the decoder side.

Therefore, the method in this embodiment of this application further includes: segmenting each of the N TBs into a same quantity of CBs, or setting the CBs into which each TB is segmented to a same length.

As described above, in this embodiment of this application, different TBs correspond to a same time-frequency resource. In other words, lengths of encoded bit sequences of all TBs are also the same. It is assumed that L (TB₁) is obtained by encoding a TB₁, and L (TB₂) is obtained by encoding a TB₂, that is, L (TB₁)=L (TB₂). In this case, segmenting each of the N TBs into the same quantity of CBs is equivalent to setting the same CB length for each TB.

For example, different TBs are segmented into a same quantity of CBs. Assuming that a quantity of CBs corresponding to a first layer (a layer with a higher code rate) is C(1), and a quantity of CBs corresponding to a second layer (a layer with a lower code rate) is C(2), C(1)=C(2).

There are the following several manners in which the different TBs are segmented into the same quantity of CBs:
1. A quantity of CBs into which each TB can be segmented is determined according to an existing protocol procedure, and then quantities of CBs of all other TBs are aligned with a quantity of CBs of a TB having a maximum quantity of CBs, thereby avoiding affecting a limit of a maximum CB quantity in an existing protocol. For a TB with a small original quantity of CBs, a code length of each CB needs to be shortened.
   For example, a length of an encoded bit sequence of the TB₁ is L (TB₁). Segmentation is performed on CBs based on a maximum length constraint value of an encoded bit sequence of a CB in the existing protocol, to obtain a quantity of CBs obtained through segmentation C (1)=L (TB₁)/I, where I represents a maximum code block constraint value. The length L (TB₂) of an encoded bit sequence of the TB₂ is segmented to obtain a quantity of CBs obtained through segmentation C (2)=L (TB₂)/I. Because R1>R2, the length L (TB₂) of the encoded bit sequence of the TB₂ is re-segmented based on the quantity R1 of CBs. In this case, a length of a CB of the TB₂ becomes shorter (which is less than I).
2. A quantity of CBs into which each TB is segmented is calculated according to an existing protocol procedure, and then quantities of CBs of all other TBs are aligned with that of a TB having a minimum quantity of CBs. In this case, for a TB with a large original quantity of CBs, a limit of a maximum CB quantity in an existing protocol may need to be exceeded.
3. A quantity of CBs of each TB is determined and aligned according to a specific function for quantities of CBs of all TBs, where the function may be, for example, direct averaging or weighted averaging, as shown in $C ′ = \left⌈\frac{{\sum }_{i = 1}^{L} C \left(i\right)}{N}\right⌉$. *C'* represents a quantity of CBs of each layer after the quantity of CBs of each layer is aligned, *C*(*i*) represents a quantity of CBs obtained by segmenting each TB according to an existing protocol, and N represents a total quantity of TBs.

It can be learned that in this embodiment of this application, quantities of CBs into which different TBs are segmented are aligned, so that a granularity of time-frequency resource alignment for the different TBs is finer, a decoding waiting delay is lower, and protocol modification complexity is greatly reduced.

Optionally, as shown in FIG. 3A, the method further includes: 203: The first device outputs the bit sequences mapped to the same constellation diagram.

Optionally, the first device may process a modulated bit sequence to obtain the first data, and send the first data to the second device.

Specifically, after mapping the N encoded bit sequences to a constellation diagram, the first device completes a symbol modulation process, and outputs the bit sequences mapped to the same constellation diagram, that is, outputs a symbol sequence. Optionally, the first device may further perform subsequent processing, which includes MIMO precoding, subcarrier mapping, inverse fast Fourier transform (inverse fast Fourier transform, IFFT), and the like, on the symbol sequence, to complete baseband signal processing, and obtain the to-be-sent first data. Further, the first data may be processed into a radio frequency signal, and the radio frequency signal is sent to the second device through the radio frequency antenna.

204: The second device receives the first data, and processes the first data.

The processing performed by the second device on the first data includes: respectively demapping the N bit segments of the constellation point in the constellation diagram to N pre-decoding bit sequences, and decoding the N pre-decoding bit sequences based on lengths of N output bit sequences (TBs). Decoding may also be referred to as decoding.

The processing performed by the second device on the first data is reverse processing corresponding to the first device. For example, the second device converts the received radio frequency signal of the first data into a baseband signal, and performs FFT, subcarrier demapping, MIMO decoding, symbol demodulation (constellation point demapping), bit sequence decoding, and the like.

Before the symbol demodulation, the second device demaps the symbol sequence to the constellation diagram, to obtain a constellation point in the constellation diagram, and demaps the symbol sequence based on the N bit segments of the constellation point in the constellation diagram, to obtain the pre-decoding bit sequence of the TB, so that a symbol demodulation process is completed.

Demapping of the symbol sequence may start from a bit segment(for example, first two bits of a constellation point in 16QAM) with a higher code rate of the constellation point in the constellation diagram, and the bit segment is demapped to a pre-decoding bit sequence. Then, a bit segment (for example, last two bits of the constellation point in the 16QAM) with a lower code rate is demapped, and the bit segment is demapped to another pre-decoding bit sequence. Finally, the N pre-decoding bit sequences of the TBs are obtained.

The pre-decoding bit sequence of the TB obtained through demapping may be a soft value. That is, the bit sequence includes a floating point number (for example, 0.8). After the pre-decoding bit sequence of the TB is further processed to obtain a hard-value bit sequence (including only two values: 0 and 1), decoding is performed.

Before decoding, the second device may determine the length of the TB based on the information related to the TB. A specific determining method is in the foregoing formulas (1-1) to (1-3). Then, a pre-decoding bit of the TB is decoded based on a corresponding code rate, to obtain a TB of a corresponding length (including only a system bit sequence).

It can be learned that in this embodiment, when learning of the information related to the TB corresponding to the first data sent by the transmitting end, a decoding side performs layered decoding and demodulation on the first data by using the code rate, the modulation order, and the quantity of REs in the information related to the TB, thereby ensuring decoding efficiency and decoding correctness.

It should be noted that the decoding manner in this embodiment of this application is merely an example for description. For the layered encoding and modulation based on this application, another decoding manner known to a person skilled in the art may be used. The decoding manner is not limited in this application.

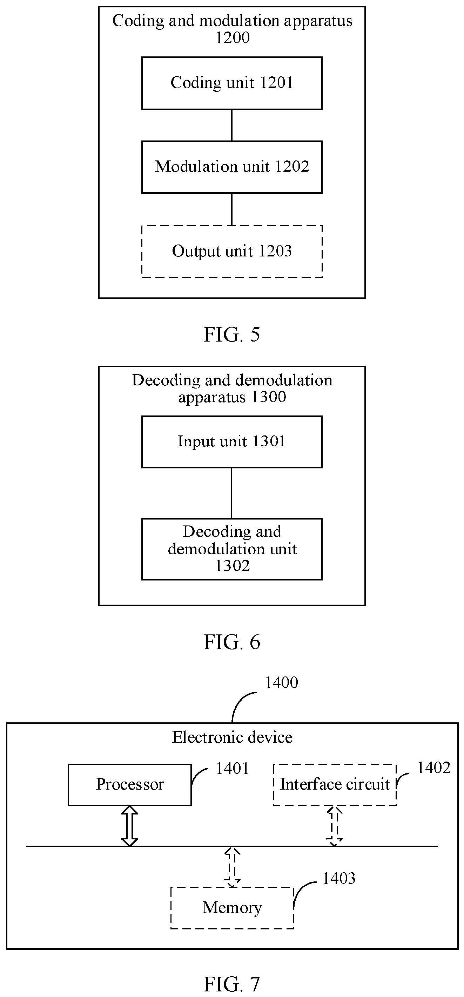

FIG. 5 is a diagram of a structure of a coding and modulation apparatus. An implementation of this application further provides a coding and modulation apparatus 1200. The coding and modulation apparatus 1200 may be a terminal device, or may be an apparatus that may be used in but is not limited to the terminal device, or may be a network device, or an apparatus that may be used in but is not limited to the network device. The coding and modulation apparatus 1200 includes a coding unit 1201 and a modulation unit 1202. The coding unit 1201 and the modulation unit 1202 may be or may be deployed on a processor. The coding and modulation apparatus may implement the coding and modulation method or procedure in any one of the foregoing embodiments.

The coding unit 1201 is configured to encode N input bit sequences by using code rates respectively corresponding to the N input bit sequences, to obtain N encoded bit sequences respectively corresponding to the N input bit sequences, where N is an integer greater than or equal to 2, a length of each input bit sequence is determined based on information related to the input bit sequence, and the information related to the input bit sequence includes at least one of the following: a code rate that corresponds to the input bit sequence, a modulation order that corresponds to the input bit sequence, and a quantity of resource elements REs used for data transmission.

The modulation unit 1202 is configured to map the N encoded bit sequences to a same constellation diagram, where the constellation diagram includes M constellation points, each constellation point includes N bit segments, the N bit segments respectively correspond to the N encoded bit sequences, and M is an integer greater than or equal to 1.

Optionally, the coding unit is further configured to determine the information related to the input bit sequence.

Optionally, the information related to the input bit sequence corresponds to one or more correspondence sets, and the correspondence set includes at least one correspondence between a modulation and coding scheme MCS index and the modulation order and/or the code rate of the input bit sequence.

Optionally, the determining the information related to the input bit sequence includes: obtaining the modulation and coding scheme MCS index and the quantity of REs, and determining the modulation order and/or the code rate of the input bit sequence based on the MCS index and the correspondence set.

Optionally, the information related to the input bit sequence is carried in higher layer signaling or downlink control information DCI.

Optionally, each of the N input bit sequences is subjected to code block segmentation to obtain a corresponding quantity of code blocks CBs.

The N input bit sequences include a reference bit sequence and another bit sequence other than the reference bit sequence, and a maximum length of an encoded bit sequence of a CB corresponding to the another bit sequence is determined based on a maximum code block constraint value and a specific constant, or a maximum length of an encoded bit sequence of a CB corresponding to the another input bit sequence is determined based on a maximum code block constraint value and a specific ratio, where the specific ratio is determined based on a ratio of a length of the another bit sequence to a length of the reference bit sequence.

Optionally, lengths of encoded bit sequences of CBs corresponding to different input bit sequences in the N input bit sequences are the same, or quantities of CBs corresponding to different input bit sequences are the same.

Optionally, the coding unit 1201 is further configured to determine a maximum length of encoded bit sequences of CBs corresponding to the N input bit sequences, including determining a maximum length of an encoded bit sequence of a CB corresponding to the reference bit sequence, and the maximum length of the encoded bit sequence of the CB corresponding to the another bit sequence in the N input bit sequences.

Optionally, the coding unit 1201 is specifically configured to determine, based on the maximum code block constraint value, the maximum length of the encoded bit sequence of the CB corresponding to the reference bit sequence.

Optionally, the coding unit 1201 is specifically configured to: determine code block-related information, and determine the maximum length of the another bit sequence based on the code block-related information, where the code block-related information includes the maximum code block constraint value, and further includes at least one of the following: the specific constant and the specific ratio.

Optionally, the coding and modulation apparatus further includes an output unit 1203, configured to output the bit sequences mapped to the same constellation diagram. In some possible implementations, the output unit may be or may be deployed in a unit or a module that can implement an output function, such as a transceiver, a transceiver antenna, or an input/output interface.

It may be understood that the coding unit and the modulation unit may alternatively be implemented by using another hardware circuit, provided that corresponding functions can be implemented. This is not limited in this embodiment of this application. For example, the coding unit may be an encoder.

FIG. 6 is a diagram of a structure of a decoding and demodulation apparatus. An implementation of this application further provides a decoding and demodulation apparatus 1300. The decoding and demodulation apparatus 1300 may be a terminal device, or may be an apparatus that may be used in but is not limited to the terminal device, or may be a network device, or an apparatus that may be used in but is not limited to the network device. The decoding and demodulation apparatus 1300 includes an input unit 1301 and a decoding and demodulation unit 1302. The decoding and demodulation unit 1302 may be or may be deployed in a processor. The decoding and demodulation apparatus may implement the decoding and demodulation method or procedure in any one of the foregoing embodiments.

The input unit 1301 is configured to input first data or obtain input first data, where the first data corresponds to N pre-decoding bit sequences respectively corresponding to N bit segment sequences in a constellation diagram, lengths of N output bit sequences corresponding to the N pre-decoding bit sequences are determined based on information related to the output bit sequences, and the information related to the output bit sequence includes a code rate, a modulation order, and a quantity of resource elements REs for data transmission.

The decoding and demodulation unit 1302 is configured to process the first data, where the processing includes respectively demapping N bit segments of a constellation point in the constellation diagram to the N pre-decoding bit sequences, and decoding the N pre-decoding bit sequences based on the lengths of the N output bit sequences.

In some possible implementations, the input unit may be or may be deployed in a unit or module that can implement an input function, such as a transceiver, a transceiver antenna, or an input/output interface.

It may be understood that the decoding and demodulation apparatus may alternatively be implemented by using another hardware circuit, provided that a corresponding function can be implemented. This is not limited in this embodiment of this application.

In addition, the coding and modulation method and the decoding and demodulation method in this application may also be separately referred to as communication methods, and the coding and modulation apparatus and the decoding and demodulation apparatus may also be separately referred to as communication apparatuses.

As shown in FIG. 7, FIG. 7 is a diagram of a hardware structure of an electronic device 1400 according to an embodiment of this application. The electronic device may implement the method or the procedure in the foregoing one or more embodiments. Optionally, for a structure of the coding and modulation apparatus 1200 or the decoding and demodulation apparatus 1300, refer to the structure shown in FIG. 7. The electronic device 1400 includes a processor 1401. Optionally, the electronic device 1400 may further include an interface circuit 1402 (represented by dashed lines in the figure), and the processor 1401 and the interface circuit 1402 are coupled to each other. It may be understood that the interface circuit 1402 may be a transceiver or an input/output interface. Optionally, the electronic device 1400 may further include a memory 1403 (represented by dashed lines in the figure). The memory 1403 is configured to: store instructions executed by the processor 1401, or store input data needed by the processor 1401 to run the instructions, or store data generated after the processor 1401 runs the instructions.

In an implementation, a function of the interface circuit 1402 may be considered to be implemented by using a transceiver circuit or a transceiver-dedicated chip. It may be considered that the processor 1401 is implemented by using a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application aims to include but is not limited to these memories and any memory of another proper type.

An embodiment of this application provides a computer storage medium, storing a computer program. The computer program is configured to perform the method corresponding to the first device or the second device in the foregoing embodiments.

An embodiment of this application provides a computer program product including instructions. When the computer program product is run on a computer, the computer is caused to perform the method corresponding to the first device or the second device in the foregoing embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A coding and modulation method, wherein the method comprises:
encoding N input bit sequences by using code rates respectively corresponding to the N input bit sequences, to obtain N encoded bit sequences respectively corresponding to the N input bit sequences, wherein N is an integer greater than or equal to 2, a length of each input bit sequence is determined based on information related to the input bit sequence, and the information related to the input bit sequence comprises at least one of the following: a code rate that corresponds to the input bit sequence, a modulation order that corresponds to the input bit sequence, and a quantity of resource elements REs used for data transmission; and
mapping the N encoded bit sequences to a same constellation diagram, wherein the constellation diagram comprises M constellation points, each constellation point comprises N bit segments, the N bit segments respectively correspond to the N encoded bit sequences, and M is an integer greater than or equal to 1.

2. The method according to claim 1, further comprising: determining the information related to the input bit sequence.

3. The method according to claim 1 or 2, wherein the information related to the input bit sequence corresponds to one or more correspondence sets, and the correspondence set comprises at least one correspondence between a modulation and coding scheme MCS index and the modulation order and/or the code rate of the input bit sequence.

4. The method according to claim 3, wherein the determining the information related to the input bit sequence comprises:
obtaining the MCS index and the quantity of REs, and determining the modulation order and/or the code rate of the input bit sequence based on the MCS index and the correspondence set.

5. The method according to any one of claims 2 to 4, wherein the information related to the input bit sequence is carried in higher layer signaling or downlink control information DCI.

6. The method according to any one of claims 1 to 5, wherein each of the N input bit sequences is subjected to code block segmentation to obtain a corresponding quantity of code blocks CBs, wherein
the N input bit sequences comprise a reference bit sequence and another bit sequence other than the reference bit sequence, and a maximum length of an encoded bit sequence of a CB corresponding to the another bit sequence is determined based on a maximum code block constraint value and a specific constant, or a maximum length of an encoded bit sequence of a CB corresponding to the another input bit sequence is determined based on a maximum code block constraint value and a specific ratio, wherein the specific ratio is determined based on a ratio of a length of the another bit sequence to a length of the reference bit sequence.

7. The method according to any one of claims 1 to 6, wherein lengths of encoded bit sequences of CBs corresponding to different input bit sequences in the N input bit sequences are the same, or quantities of CBs corresponding to different input bit sequences are the same.

8. The method according to claim 6, wherein the method further comprises: determining a maximum length of encoded bit sequences of CBs corresponding to the N input bit sequences, comprising determining a maximum length of an encoded bit sequence of a CB corresponding to the reference bit sequence, and the maximum length of the encoded bit sequence of the CB corresponding to the another bit sequence in the N input bit sequences.

9. The method according to claim 8, wherein the determining the maximum length of the encoded bit sequence of the CB corresponding to the reference bit sequence comprises:
determining, based on the maximum code block constraint value, the maximum length of the encoded bit sequence of the CB corresponding to the reference bit sequence.

10. The method according to claim 8 or 9, wherein the determining the maximum length of the encoded bit sequence of the CB corresponding to the another bit sequence comprises:
determining code block-related information, and determining the maximum length of the another bit sequence based on the code block-related information, wherein the code block-related information comprises the maximum code block constraint value, and further comprises at least one of the following: the specific constant and the specific ratio.

11. A coding and modulation apparatus, wherein the apparatus comprises:
a coding unit, configured to encode N input bit sequences by using code rates respectively corresponding to the N input bit sequences, to obtain N encoded bit sequences respectively corresponding to the N input bit sequences, wherein N is an integer greater than or equal to 2, a length of each input bit sequence is determined based on information related to the input bit sequence, and the information related to the input bit sequence comprises at least one of the following: a code rate that corresponds to the input bit sequence, a modulation order that corresponds to the input bit sequence, and a quantity of resource elements REs used for data transmission; and
a modulation unit, configured to map the N encoded bit sequences to a same constellation diagram, wherein the constellation diagram comprises M constellation points, each constellation point comprises N bit segments, the N bit segments respectively correspond to the N encoded bit sequences, and M is an integer greater than or equal to 1.

12. The apparatus according to claim 11, wherein the coding unit is further configured to determine the information related to the input bit sequence.

13. The method according to claim 11 or 12, wherein the information related to the input bit sequence corresponds to one or more correspondence sets, and the correspondence set comprises at least one correspondence between a modulation and coding scheme MCS index and the modulation order and/or the code rate of the input bit sequence.

14. The apparatus according to claim 13, wherein the determining the information related to the input bit sequence comprises: obtaining the modulation and coding scheme MCS index and the quantity of REs, and determining the modulation order and/or the code rate of the input bit sequence based on the MCS index and the correspondence set.

15. The method according to any one of claims 12 to 14, wherein the information related to the input bit sequence is carried in higher layer signaling or downlink control information DCI.

16. The apparatus according to any one of claims 11 to 15, wherein each of the N input bit sequences is subjected to code block segmentation to obtain a corresponding quantity of code blocks CBs, wherein
the N input bit sequences comprise a reference bit sequence and another bit sequence other than the reference bit sequence, and a maximum length of an encoded bit sequence of a CB corresponding to the another bit sequence is determined based on a maximum code block constraint value and a specific constant, or a maximum length of an encoded bit sequence of a CB corresponding to the another input bit sequence is determined based on a maximum code block constraint value and a specific ratio, wherein the specific ratio is determined based on a ratio of a length of the another bit sequence to a length of the reference bit sequence.

17. The apparatus according to any one of claims 11 to 16, wherein lengths of encoded bit sequences of CBs corresponding to different input bit sequences in the N input bit sequences are the same, or quantities of CBs corresponding to different input bit sequences are the same.

18. The apparatus according to claim 16, wherein the coding unit is further configured to:
determine a maximum length of encoded bit sequences of CBs corresponding to the N input bit sequences, comprising determining a maximum length of an encoded bit sequence of a CB corresponding to the reference bit sequence, and the maximum length of the encoded bit sequence of the CB corresponding to the another bit sequence in the N input bit sequences.

19. The apparatus according to claim 18, wherein the coding unit is specifically configured to:
determine, based on the maximum code block constraint value, the maximum length of the encoded bit sequence of the CB corresponding to the reference bit sequence.

20. The apparatus according to claim 18 or 19, wherein the coding unit is specifically configured to:
determine code block-related information, and determine the maximum length of the another bit sequence based on the code block-related information, wherein the code block-related information comprises the maximum code block constraint value, and further comprises at least one of the following: the specific constant and the specific ratio.

21. An electronic device, wherein the electronic device comprises a processor, the processor is coupled to a memory, and when the processor executes a computer program or instructions in the memory, the method according to any one of claims 1 to 10 is performed.

22. A computer-readable storage medium, wherein the computer-readable storage medium stores computer instructions, and the computer instructions instruct a communication device to perform the method according to any one of claims 1 to 10.

23. A circuit, comprising a processor and an interface, and configured to execute a computer program or instructions stored in a memory, to perform the method according to any one of claims 1 to 10.

24. A computer program product, wherein the computer program product comprises a computer program, code, or instructions, and when the computer program is run, a computer is caused to perform the method according to any one of claims 1 to 10.
